# EUROPEAN PATENT SPECIFICATION

(11) **EP 1 205 593 B1**
(45) Date of publication and mention of the grant of the patent: **28.01.2004**
(21) Application number: 01125439.8
(22) Date of filing: 02.11.2001
(51) Int. Cl.: D06M 15/55, D06M 13/148

(54) **Polyester yarn with sequentially coated reactive finishes, process for making the yarn, and a rubber composite employing the yarn**
Mit aufeinanderfolgenden reaktiven Ausrüstungsmitteln beschichtetes Polyestergarn, Verfahren zur Herstellung dieses Garnes, sowie dieses Garn enthaltender Kautschukverbundwerkstoff
Fil en polyester enduit successivement avec des apprêts réactifs, procédé pour la production du fil, et matériau composite en caoutchouc le comprenant

(30) Priority: 08.11.2000 US 708330
(43) Date of publication of application: 15.05.2002
(73) Proprietor: ARTEVA TECHNOLOGIES S.à.r.l., 8001 Zürich (CH)
(72) Inventor: Anderson, Norman S., Davidson, NC 28036 (US); Sherriff, Stephan F., Salisbury, NC 281476 (US)
(74) Representative: Schweitzer, Klaus, Dr.

(56) References cited:
- EP-A- 0 395 435
- EP-A- 0 458 647
- US-A- 4 348 517
- US-A- 4 397 985

## Description

This invention relates: (a) to a novel twice-coated multifilament polyester yarn, such as polyethylene terephthalate (PET) coated with a known halohydroxy reactive spin finish and then over-coated with a second (hence "top-coated") reactive epoxide finish; (b) to a new polyester fiber finishing process to make the top-coated yarn, in which process the reactive epoxide is applied to the once-coated yarn; and (c) a rubber composite comprising a coated, over-coated and RFL (resorcinol-formaldehyde-latex) dip coated yarn in a rubber composition.

Polyester fibers are routinely given a spin-finish, which improves adhesion of rubber to the fibers when they are spun into yam, and the yarn is twisted into cord for use in tires, conveyor belts and the like. The term "spin finish" is used herein to emphasize that the finish is applied after spinning the filaments but before drawing the yarn. Polyester yarn coated with a spin finish is referred to in the art as being "adhesive-activated" yarn, and the finish as being an "adhesive-activating" finish. Though the term "adhesive-activated" is commonly used, there appears to be no consensus as to when a spin-finish fulfills the function of an "activator", and even less as to why, or how it does so. There is no consensus as to which of several compound(s) in a spin-finish provides the maximum "activity" for improved subsequent adhesion to rubber. It is generally presumed that "activity" refers to reactivity of a component of the spin-finish with that of a key component of a conventional RFL (resorcinol-formaldehyde-latex) dip; and the key component of the RFL dip is generally the phenolic component. A conventional RFL dip is formulated with a resorcinol/formaldehyde solution added to 2-vinylpyridine-styrene-butadiene, typically at least 12% by weight.

Yarn is coated either in a single stage or a multiple stage process, with finishing compositions such as are disclosed in Japanese Patent Application No. 9-158053; U.S. Patent Nos. 3,730,892; 3,940,544; 4,054,634; 4,210,700; and, U.S. Patents Nos. 4,929,769; 4,933,236 ('236) and 5,328,765 ('765), *inter alia.* The finish according to the '765 patent provides excellent adhesion for most applications when used as the only coating.

The term "top-coat" as used herein refers to a second coating superimposed upon a primary coating which is a spin finish. The term was used in the '236 patent to refer to a quaternary ammonium salt of a polyepoxide wherein the ammonium moiety is bonded directly to a carbon atom of the polyepoxide chain. The polyepoxide was used to coat drawn yarn. The term "spin finish" was used to refer to the polyepoxide when it was used to coat undrawn yarn (see col 11, lines 43-46, of the '236 patent). The polyepoxide was not used to coat a yarn which had already been coated with a spin finish.

Each of the foregoing references teaches that the surface of the yarn is coated with the disclosed finishing composition ("finish") which is present in wide-ranging amounts. The amount may range from just sufficient to coat only a portion of the available surface area of the yarn, up to an amount of the finish greatly in excess of that required to coat the entire surface of the yarn. In general, when the once-coated yarn is heat-set and dipped in a RFL dip and cured, the adhesion is satisfactory for numerous applications. There is no teaching which helps one logically choose what compounds in a reactive finish might chemically react satisfactorily with the phenolic component of a RFL dip. No reference teaches that when polyester yam with a spin-finish is heat-set, the finish is desirably chemically bonded to the surface of the yam by the finish reacting with available OH (hydroxyl) and COOH (carboxyl) groups of the polyester. Ideally, as in the '236 and '765 patents, one seeks to provide a spin finish chemically bonded to reactive groups in the polyester yarns, thus "activating" the yarn, so that the finished yarn, when dipped in a conventional RFL bath and cured, provides cohesive or near-cohesive failure.

Japanese Patent Application No. 9-158053 teaches a spinning finish containing an ethylene oxide and/or propylene oxide adduct of an aliphatic compound which is coated on a yarn which is thermally drawn. Then a finishing oil is applied to the yarn, this finishing oil containing an epoxy compound having two epoxy groups in one molecule, a blocked isocyanate compound, a silane coupling agent and an ethylene oxide and/or propylene oxide adduct of a fatty acid amide.

In the '765 patent, a finish was prepared (hereafter "the '765 spin-draw finish") containing adhesive-activator and both lubricant and emulsifier; the adhesive activator is a halohydroxy compound such as one having the structure (I) below, namely an ether of a polyol, typically glycerol, containing at least some oxychloropropylene units, each with a terminal glycerol ether unit, in combination with a coreactant. The halohydroxy organic compound has primary halogen and hydroxyl functionalities, a halohydrin value less than or equal to 1.7% and an epoxy value less than or equal to 0.36%. The coreactant consists essentially of a salt of a weak acid, typically a cationic compound of an acid having an ionization constant pKₐ > 2.5, e.g. an alkaline earth metal carbonate.

Formula (I) is represented by the structure 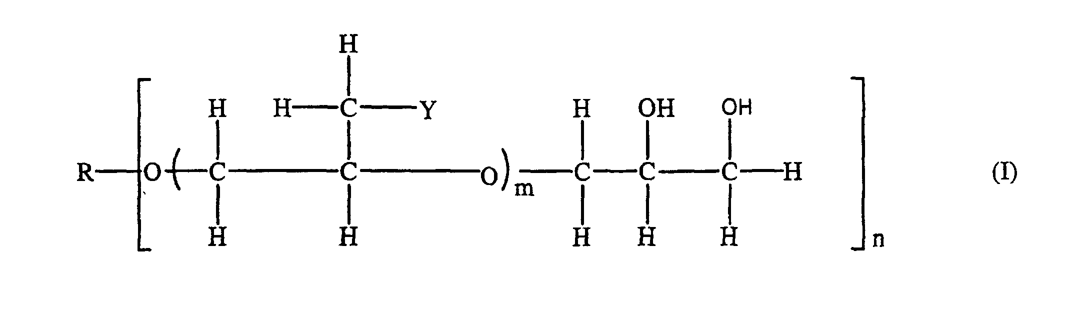 wherein R represents the remainder of the halohydroxy compound without its OH groups;
m is a number in the range from 0 to 7, preferably 2 to 5, being the number of repeating units in each ether chain; n is in a range of 1 to 8; Y is selected from the group consisting of hydroxy, chlorine, bromine, iodine, and mixtures thereof;
the sum of all Y-substituted methyloxyethylene units is 1 to 25, typically 2 to 8; and Y must be a halogen, identified herein, in at least a portion of the overall molecule, with the proviso that when bromine and iodine are absent in Y there must be at least two 2-chloromethyloxyethylene units in the overall molecule, and when Y is either bromine or iodine there is at least one 2-bromomethyloxyethylene or 2-iodomethyloxyethylene unit in the overall molecule. The remainder R is typically a polyol, thiol, carboxylic, thiocarboxylic, or phenolic residue.

There is no suggestion in the art that a fiber which has been provided with a reactive but epoxide-free spin finish, by itself known to provide acceptable peel strength, should benefit from being top-coated with an a reactive epoxy (that is, epoxide or polyepoxide) finish; or, that an epoxide top-coat may be used without using a hardener for the epoxide resin.

It has been discovered that adhesion of rubber to polyester yam or cord such as is provided the reactive spin finish disclosed in the '765 patent, can be unexpectedly increased by over-coating or "top-coating" with a second reactive finish (hereafter "reactive topcoat" to distinguish it over the reactive first finish) of an epoxy resin having at least two reactive epoxy groups, typically terminal groups. No conventional hardener is added to cure the epoxide resin top-coat.

It is therefore a general object of this invention to provide a polyester yarn coated with from about 0.01% to about 1.0% by weight of a reactive '765 spin finish comprising the reaction product of a halogenated polyether having the structure (I), and a salt of a weak acid, which yam is then top-coated with from about 0.001% to 1.0%, preferably from about 0.05% to 0.4% by weight of a polyepoxide having from 2 to about 20 epoxy groups, in the absence of a conventional hardener for curing the epoxide. Such yarn coated with a conventional RFL dip and heated to a temperature in the range from about 200°C to 250°C unexpectedly provides further improvement in the superior adhesion provided by the '765 finish; such adhesion is obtained when the cords are embedded in rubber and heated to the rubber's curing temperature in the range from about 135°C to 185°C. Thus the degree of adhesion obtained between RFL-treated cord and cured rubber depends upon both, the choice of the spin finish and its halohydroxy compound, the reactant, and the choice of the epoxy resin top-coat.

It is a specific object of this invention to provide a novel polyester yarn which is coated with a primary spin-draw finish comprising (i) a halohydroxy organic compound having the structure (I) and (ii) an inorganic weak acid coreactant; the coated yarn is drawn at a temperature in the range from 25°C to 240°C and heat-set at a temperature in the range from about 200°C to about 250°C. The once-coated heat-set yarn is then coated with a polyepoxide having from 2 to about 12 epoxy groups, preferably a polyglycidyl-ether having from 3 to about 10 glycidylether groups. The yarn is then twisted into cord having desired characteristics before it is dipped in a conventional RFL dip, heated and then embedded in rubber and cured at curing temperature. Optionally, the yarn may be woven into a fabric which is dipped in a conventional RFL dip, heated and then embedded in rubber and cured at curing temperature.

It is another specific object of this invention to provide a process for modifying the surface of yam, with a macromolecular polyether reaction product which has a configuration that provides a first reactive spin finish before drawing the yarn and heat-setting it, the coated surface is again coated with a second reactive finish or "top-coat" comprising an epoxide which provides at least two epoxide groups. When the top-coated yarn is dipped in a conventional RFL dip and cured, a cohesive or near-cohesive bond is obtained between the cords twisted from the yarn and the rubber in which they are embedded.

It is another specific object of the invention to provide a composite comprising a coated polyester yam wherein the first coating is the reaction product of a halohydroxy organic compound in a salt of a weak acid, a second coating is an epoxy resin having at least two epoxy groups and being present in an amount in the range of from about 0.001 % to about 1.0% by weight of the yam, and a third coating of a conventional RFL dip. The composite could be manufactured in a conventional way into a tire.

Commercially available polyester yarns manufactured by well-known methods are used. Such yarns are typically obtained by reacting one or more glycols of the series HO(CH₂)ₚOH wherein p is an integer in the range from 2 to about 6, or dimethylol cyclohexane, with one or more dicarboxylic acids such as naphthalene dicarboxylic acid, 4,4'-diphenyl dicarboxylic acid, isophthalic acid, or, preferably, terephthalic acid or the ester equivalent of the dicarboxylic acid. Preferably, the polyester is PET which has an intrinsic viscosity (IV) of at least 0.35, and when employed in the production of tire yarn or other industrial elastomeric applications, has a preferred IV of at least 0.7 deciliters per gram. IV is the intercept at zero concentration of a graph plotting the ratio of specific viscosity (SV) to concentration (C) in grams per deciliter, namely SV/C, against C at 25°C of solutions of the polyester in orthochlorophenol.

The halogenated polyether (I) contains at least one unit 2-halomethyloxyethylene and at least one 2,3-dihydroxypropoxy end group, preferably at least two 2,3-dihydroxypropoxy end groups and no epoxy groups; formula (I) is typically formed from a polyol R-(OH)_{y} having from 1 to about 8, preferably from 2 to 6, reactive OH groups and free of any other reactive group which might interfere with the synthesis sequence set forth herein and in the '765 patent, the disclosure of which is incorporated by reference thereto as if fully set forth herein.

Representative polyhydroxy compounds include glycerol, ethylene glycol, pentaerythritol, 1,2-propylene glycol, 1,4-butanediol, 1,4-butenediol, trimethylolpropane, sorbitol, mannitol, triethanolamine, thiodiglycol, polyethylene glycol, diglycerol, triglycerol, decaglyerol, neopentylglycol, sorbitan, trimethylolethane, bisphenol A, dipentaerythritol, tripentaerythritol, etc. Preferred polyethylene glycols commonly have molecular weights ranging from about 150 to 3,350. Preferred compounds are glycerol (1,2,3-trihydroxypropane), ethylene glycol, polyethylene glycol, and trimethylolpropane, ethylene glycol and glycerol being most preferred.

The polyhydroxy compound is etherified in the presence of an appropriate catalyst with an epihalohydrin represented by the structure: 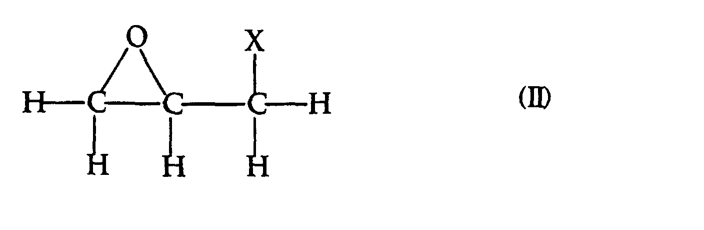 wherein X is chlorine, bromine, iodine, or mixtures thereof, most preferred being chlorine. Suitable acid catalysts for etherification are Lewis acids, such as BF₃, stannic chloride, organotitanates, etc.;
organo acids, such as para-toluene sulfonic acid, methane sulfonic acid, etc.; and inorganic acids,
such as sulfuric acid; most preferred is BF₃ used in a concentration in the range from about 0.02% to 0.2% by weight based on the weight of the reactants.

Etherification of R-(OH)_{y} results in the formation of 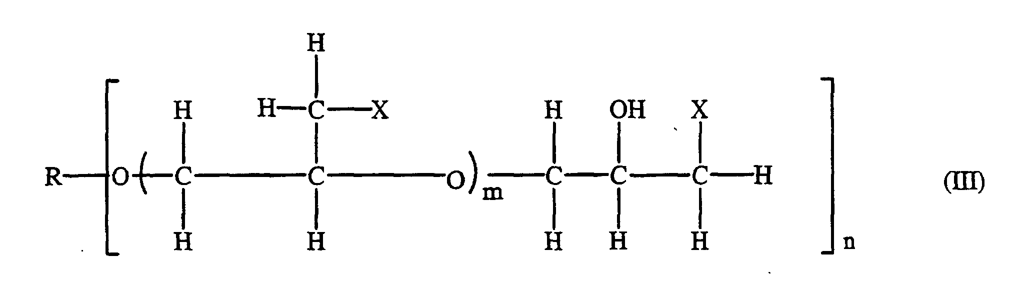 wherein n is in the range from 1 to 8, and not all OH groups need be etherified; m has the same connotation as that given hereinabove; and, the molar amount of epihalohydrin to be used is determined by the fraction of OH groups to be etherified.

Formula (III) is then epoxidized in the presence of a base, e.g. sodium hydroxide, at ambient conditions wherein water and sodium chloride are formed as byproducts. Other bases which may be used include alkaline earth metal, and other alkali salts, e.g. the carbonates such as potassium carbonate, and the hydroxides such as magnesium hydroxide, in an equimolar amount corresponding to the number of ether side chains which extend from the residual portion of the polyol. Severe epoxidation conditions (e.g., higher base concentrations and/or elevated temperatures), will convert a portion of chlorine, bromine, and iodine-substituted methyloxyethylene units to hydroxy-substituted methyloxyethylene units. The epoxidized material is then hydrolyzed to convert the epoxy groups to glycol groups, as shown in Formula (I).

The product (I) is mixed with the coreactant and coated on the yarn or cord which is drawn, preferably twice, and conventionally heat-set as disclosed in the '765 patent. The heat-set yarn is cooled to ambient temperature and coated with an epoxide dispersion or solution so that substantially the entire available surface of the yarn is coated. The epoxide chosen is not critical so long as it provides at least one reactive epoxide group for reaction with the OH groups of (I), and at least one for the phenolic or alcoholic groups in components of the RFL dip. Though a polyepoxide having one or more reactive silane groups produces improved bonding, most preferred polyepoxides are those which do not contain a reactive silane group, which may interfere with generating a strong bond with reactive groups of (I) and those of the RFL dip. Such preferred polyepoxides include:
(i) polyglycidyl ethers having three or more glycidyl ether groups and derived from polyol having from 3 to 15 carbon atoms, or a polyphenol having from 2 to 20 repeating units;
(ii) an epoxy novolac resin having the structure 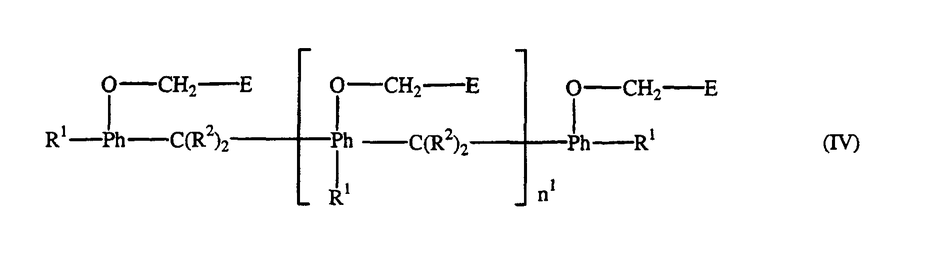 where Ph represents a phenyl ring, and
   E represents an epoxide ring 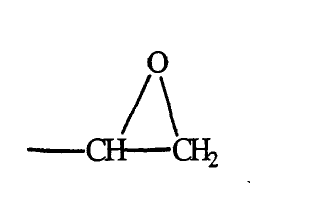
   - R¹: is a substituent on the phenyl ring, and represents hydrogen, halogen, alkyl or aryl, preferably C₁ - C₄ alkyl;
   - R²: represents hydrogen, alkyl, aryl, or an aryl group substituted by glycidyl ether;
   and n¹ has a value not less than 0, typically in the range from 0.1 to 5;
(iii) a polyfunctional alkylene epoxide having the structure 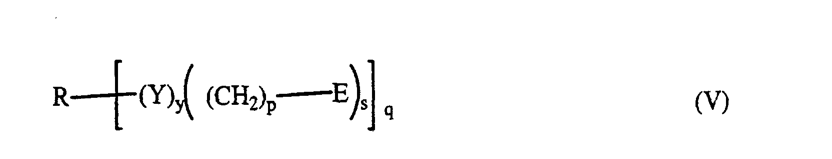 wherein R is an aromatic, aliphatic, aralkyl radical which may have a substituent;
   E represents an epoxide ring;
   Y is a heteroatom selected from oxygen (O), nitrogen (N) and sulfur (S);
   y represents zero or 1;
   p represents an integer in the range from 1 to 6;
   q represents an integer in the range from 2 to 12; and
   s represents 1 or 2;
(iv) diglycidyl ethers having the structure 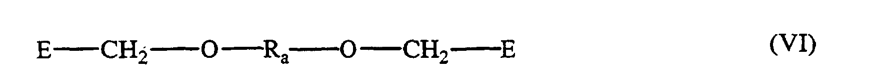 wherein Rₐ represents alkylene or arylene; and,
   E represents an epoxide; and,
(v) a bisphenol-A based resin having a structure 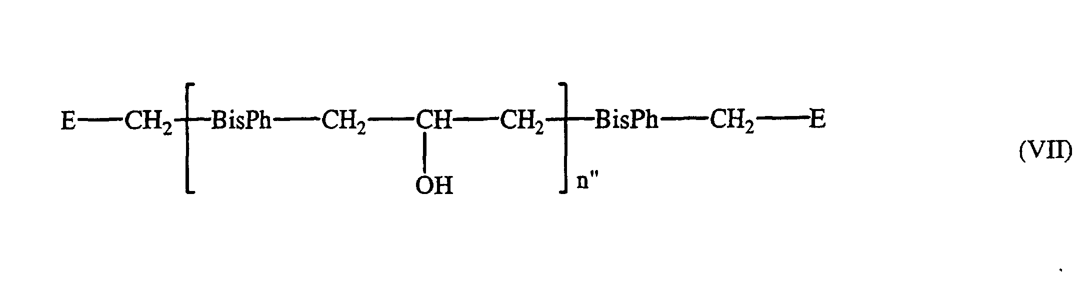
where BisPh represents O - Ph - C(Me)₂ - Ph - O,
E represents an epoxide ring
Me represents a methyl group, and
n" has a value in the range from about 0.1 to about 5.

From the foregoing it will now be evident that useful epoxy resins are selected from those represented by the structures 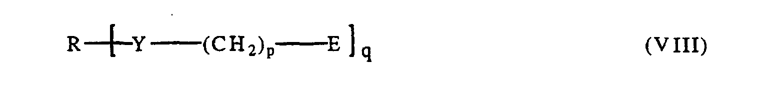 and, 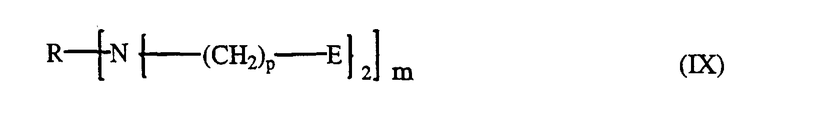 wherein R is an aromatic, aliphatic or aralkyl radical which may have a substituent,
E represents an epoxide ring;
Y is a heteroatom selected from O and S;
m represents an integer in the range from 1 to about 4, preferably 2 to 4;
p represents an integer in the range from 1 to about 6, preferably 1 to 3;
q represents an integer in the range from 2 to about 12.

Commercially available glycidyl epoxy resins are most preferred, which in general, are mixtures of high and low-molecular weight resins, the distribution of the molecular weights varying with the conditions of synthesis, most preferred being resins having a molecular weight in the range from about 300 to 5000. Useful polyepoxides are tetraglycidyl ether of glyoxal phenol novolac such as XB 4399-3; and Tactix® tris(hydroxyphenyl) methane based epoxies; Araldite® epoxy cresol novolacs ECNs 9511, 1273, 1280, 1299, 1400; Araldite® epoxy phenol novolacs EPNs 1179, 1180, 9880, PY 307-1; Araldite® epoxies MYs 0500, 0510; 721, 9655, 720, 9612, 9512, 9634, 9663; and many other reactive epoxy resins having no other reactive groups other than 1,2-epoxide groups, all the foregoing being available from VANTICO (formerly Ciba). Other useful epoxides are polyglycidyl ethers of polyols such as glycerol polyglycidyl ether, sorbitol polyglycidyl ether, polyglycerol polyglycidyl ether, and the like, all available from Nagase. Most preferred are polyepoxides, particularly epoxy novolacs having an epoxy functionality in the range from 3 to about 10.

Because preferred epoxy resins are either solids or high-viscosity liquids at ambient conditions, and not readily dispersed homogeneously in the top-coat composition, except as aqueous dispersions or emulsions of the epoxy resin, it is applied in a solvent in which the epoxy resin is soluble up to at least 10% and preferably at least 50% by weight of solution. Preferred solvents are essentially non-volatile at about 38°C and preferably even at processing temperatures up to about 200°C so they are almost non-flammable at atmospheric pressure. Most preferred solvents are liquid polymer solvents which have a flash point above about 100°C and are essentially free of a reactive OH group. Such solvents are exemplified by reverse block copolymers of lower (C₂- C₄) alkylene oxides having terminal secondary OH groups; polyoxyalkylene mono- and di- C₁-C₂₀ ethers, polyoxyalkylene di- C₁-C₂₀ esters, and polyoxyalkylene C₁-C₂₀ etheresters, wherein polyoxyalkylene represents from 2 to 20 repeating oxyalkylene units either the same or different (in a copolymer), e.g. oxyethylene, oxypropylene, oxybutylene.

Preferred solvents include a reverse block 10/90 ethylene oxide (EO)/propylene oxide (PO) copolymer; polyoxyethylene POE(6)C₈-C₁₈ alcohols with a methyl cap; polyethylene glycol PEG 400 with double methyl cap; POE(9)pelargonate with ethyl cap; POE(9)laurate with methyl cap; PEG 400 dilaurate; and the like. The most preferred solvents being alkoxylated, particularly ethoxylated compositions.

Lubricants and emulsifiers which may be used in the composition are well known to those skilled in the art; some lubricants also function as emulsifiers, and some emulsifiers also function as lubricants.

Such conventional lubricants include polyalkylene oxide polymers and copolymers, natural, refined and synthetic hydrocarbons, alkoxylated alcohols and phenols, natural oils and fats, oxidized polyolefins, silicones, sulfates and sulfonates, phosphates, alkoxylated amines, tertiary ammonium compounds, soaps, amphoteric compounds, and the like.

Emulsifying agents such as ethoxylated sorbitan esters or ethoxylated long chain alcohols; and conventional antioxidants such as 4,4'-thiobis(6-tertiary butyl-m-cresol) or 2,2'-methylene bis(4-methyl-6-nonylphenol) may also be added.

The temperature at which the top coat is applied is in the range from about 20°C to about 100°C, preferably from about 20° to about 60°C.

The total amount of dry epoxy applied on the surface of the yam typically ranges from about 0.03% to about 1.0% by weight of the yarn, preferably from about 0.1% to about 0.5% by weight. Since the dry epoxy is typically present in the topcoat in the range from 10 to 100% of the dry weight of the topcoat, the dry weight of topcoat on yarn ranges from 0.03 to 10%, preferably from 0.1 to 1.5%.

In the following Examples all percentages given are by weight unless stated otherwise.

The following spin-draw finishes are used in illustrative Examples 1 through 8 below:

| Component | Spin-draw finish used in Example 1 Amount, % (dry weight) |
|---|---|
| halohydroxy compound A* | 13.0 |
| potassium acetate | 2.4 |
| ® Irganox 1035 (Ciba Specialty Chemicals Corp., Tarrytown, NY, USA) (antioxidant) | 1.0 |
| ® Afilan PNL (Clariant Corp., Charlotte,, NC, USA) (Clariant finish) | 1.0 |
| ® Ucon 75H 9500 (Dow Chemical Co., Midland, Michigan, USA) (an ethylene oxide, propylene oxide copolymer) | 0.7 |
| ester lubricant ^{b} | 2.0 |
| POP(7.6)stearate | 18.5 |
| pentaerythritol tetrapelargonate | 10.0 |
| POE(20)sorbitan mono-oleate | 20.0 |
| POE(9)C ₁₁ -C ₁₅ sec. alcohols | 5. 0 |
| POE(6)C ₈ -C ₁₈ alcohols/methyl cap | 15. 0 |
| POE(10)oleyl alcohol | 11.4 |

| | |
|---|---|
| ^{b} ethoxylated POE(40) hydrogenated castor oil reacted to about MW 4000 with maleic anhydride and stearic acid | |
| *The halohydroxy compound A was prepared from 1 mole of ethylene glycol and 5.5 moles epichlorohydrin as raw materials in a multistep reaction leading to a ethylene glycol ether containing nominally 3.5 chlorinated oxypropylene units with terminal 1-glycerol ether units. | |

A typical analysis of the halohydroxy adhesive compound is a hydroxyl value of 382 milligrams of KOH per gram, a chlorine content of 23.4% and an epoxy content of 0.14% (as epichlorohydrin) and a chlorohydrin content of 0.3% (as chlorine).

| Component | Spin-draw finish used in Example 2 Amount, % (dry weight) |
|---|---|
| halohydroxy compound B* | 13.0 |
| potassium carbonate | 1.6 |
| POE(20) sorbitan mono-oleate | 33.6 |
| POE(12.5) octylphenol | 11.6 |
| organomodified silicone (poly(dimethyl siloxane) with poly(ethylene glycol) side chains; Dow Chemical Co., Midland, Michigan, USA) | 23.2 |
| the remaining 17% comprising minor additional components | |

| | |
|---|---|
| * The halohydroxy compound B was prepared from 1 mole of glycerol and 7 moles epichlorohydrin as raw materials in a multistep reaction leading to a glycerol ether containing nominally 4 chlorinated oxypropylene units with terminal 1-glycerol ether units. A typical analysis of the halohydroxy adhesive compound is a typical hydroxyl value of 430 milligrams of KOH per gram, a chlorine content of 17% and an epoxy content of 0.02% (as epichlorohydrin) and a chlorohydrin content of 0.24% (as chlorine). | |

| Component | Spin-draw finish used in Example 3 Amount, % (dry weight) |
|---|---|
| halohydroxy compound A | 13.0 |
| potassium acetate | 1.7 |
| POE(20) sorbitan mono-oleate | 33.5 |
| POE(12) octylphenol | 11.6 |
| organomodified silicone | 23.2 |
| the remaining 17% comprising minor additional components | |

| Component | Spin-draw finish used in Example 4 Amount, % (dry weight) |
|---|---|
| halohydroxy compound A | 13.0 |
| potassium propionate | 2.7 |
| Irganox 1035 | 1.0 |
| Afilan 4LPN (Clariant finish) | 5.0 |
| POE(5)C₁₂-C₁₅ alc. phosphate K salt | 1.0 |
| Ucon 75H 9500 (an ethylene oxide, propylene oxide copolymer) | 0.7 |
| ester lubricant^{b} | 2.0 |
| POP(7.6)stearate | 11.5 |
| POE(20)sorbitan mono-oleate | 19.3 |
| POE(25) hydrogenated castor oil | 4.0 |
| POE(25) hydrogenated castor oil trilaurate | 10.0 |
| POE(9)C₁₁-C₁₅ sec. alcohols | 5.0 |
| POE(6)C₈-C₁₈ alcohols/methyl cap | 24.9 |

| | |
|---|---|
| ^{b} same as in "b" above | |

| Component | Spin-draw finish used in Example 5 Amount, % (dry weight) |
|---|---|
| halohydroxy compound A | 13.0 |
| potassium heptanoate | 4.8 |
| Irganox 1035 | 0.5 |
| Afilan 4LPN | 5.0 |
| POE(5)C₁₂-C₁₅ alc. phosphate K salt | 1.0 |
| Ucon 75H 9500 (an ethylene oxide, propylene oxide copolymer) | 0.7 |
| ester lubricant^{b} | 2.0 |
| POP(7.6)stearate | 27.0 |
| POE(25) hydrogenated castor oil | 16.0 |
| POE(25) hydrogenated castor oil trilaurate | 6.5 |
| POE(9)C₁₁-C₁₅ sec. alcohols | 5.0 |
| POE(6)C₈-C₁₈ alcohols/methyl cap | 11.4 |
| POE(10)oleyl alcohol | 7.1 |

| | |
|---|---|
| ^{b} same as in "b" above | |

The spin-draw finish used in Example 6 below is the same as the spin-draw finish used in Example 3.

, The spin-draw finish used in Example 7 below is the same as the spin-draw finish used in Example 1.

| Component | Spin-draw finish used in Examples 8-12 Amount, % (dry weight) |
|---|---|
| halohydroxy compound A | 13.0 |
| potassium acetate | 1.7 |
| Irganox 1035 | 1.0 |
| Afilan 4LPN | 5.0 |
| Ucon 75H 9500 (an ethylene oxide, propylene oxide copolymer) | 0.7 |
| ester lubricant ^{b} | 2.0 |
| POE(20)sorbitan mono-oleate | 20.6 |
| POE(25) hydrogenated castor oil trilaurate | 23.0 |
| POE(9)C ₁₁ -C ₁₅ sec. alcohols | 5.0 |
| POE(6)C ₈ -C ₁₈ alcohols/methyl cap | 28.0 |

| | |
|---|---|
| ^{b} same as in "b" above | |

Given below are the compositions of epoxy top-coats used in the following illustrative examples:

### Epoxy Top-coat used in Example 1

An aqueous dispersion or emulsion of a cresol novolac polyglycidyl ether resin with 5.1 epoxy groups per molecule and a particle size of less than 2 microns, specifically Ciba 94-105, diluted from 55% down to 7.5% with deionized water.

### Epoxy Top-coat used in Example 2

® Ciba Araldite ECN 9499 (Ciba Specialty Chemicals Corp., Tarrytown,NY, USA) (25%) dissolved in a POE(6)C₈-C₁₈ alcohols with a methyl cap (75%) with a minor amount of dyes as markers. ECN 9499 is cresol novolac poly glycidyl ether with 5.4 epoxy groups per molecule.

Epoxy Top-coats used in Examples 3, 4, 5, 6 & 8

Each is the same topcoat used in Example 2

### Epoxy Top-coat used in Example 7

An aqueous dispersion of a cresol novolac polyglycidyl ether resin with 5.4 epoxy groups per molecule, commercially available as Ciba ECN 1400 (Ciba Specialty Chemicals Corp., Tarrytown, NY, USA), is diluted from 40% to 7.5% concentration, and mixed with 0.1 % of Tergitol 15-S-9 wetting agent.

### Epoxy Top-coat used in Example 9

| | |
|---|---|
| 50% | sorbitol polyglycidyl ether, 4 epoxy groups/molecule (® Denacol EX-62; Nagase Chemical Ltd., Osaka, Japan) |
| 49.6% | POE(6)C₈-C₁₈ alcohols with methyl cap |
| 0.4% | red dye marker (® Milliken Red 9805-17, Milliken Chemical Co., Spartanburg, SC, USA) |

### Epoxy Top-coat used in Example 10

| | |
|---|---|
| 50% | sorbitol polyglycidyl ether, 4 epoxy groups/molecule (Denacol EX-622) |
| 49.6% | PEG400 dilaurate (® Ethox DL-9, Ethox Chemicals LLC, Greenville, SC, USA) |
| 0.4% | red dye marker (Milliken Red 9805-17) |

### Epoxy Top-coat used in Example 11

| | |
|---|---|
| 25% | epoxy phenol novolac, 3.6 epoxy groups/molecule (Araldite EPN 9880 CH, Ciba Specialty Chemicals Corp., Tarrytown, NY, USA) |
| 74.6% | POE(6)C₈-C₁₈ alcohols with methyl cap |
| 0.4% | red dye marker (Milliken Red 9805-17) |

### Epoxy Top-coat used in Example 12

| | |
|---|---|
| 25% | aromatic amino epoxy, 4 epoxy groups/molecule (Araldite MY 721) |
| 74.6% | POE(6)C₈-C₁₈ alcohols with methyl cap |
| 0.4% | red dye marker (Milliken Red 9805-17) |

Adhesion testing: The adhesion test samples were prepared according to ASTM D-4393-98, with minor changes. In section 8.1, a backing fabric is used in place of a Holland cloth; the samples were built so that the cords were side by side and touching each other, but not counted. The average force required to pull the sample apart at a specified temperature was recorded and averaged, and the amount of rubber remaining on the cords was estimated visually and rated. A score of 10 indicates cohesive failure corresponding to 100% of the surface of the cords being covered with rubber; a score of 9 indicates near-cohesive failure corresponding to 90% of the surface of the cords being covered with rubber; a score of 6 indicates 60% of the cords' surface is covered with rubber. The rubber, known to be particularly challenging with respect to obtaining good adhesion to cords, was deliberately chosen to magnify differences between different finishes.

In the following illustrative examples of epoxy-top-coated polyester yarn, test results are the average obtained from a statistically significant number of test samples.

### Example 1

Molten PET having an intrinsic viscosity of 0.93 dl/g was spun at a temperature of about 304°C.

A spin-draw finish was applied to the spun yarn after solidification, and before drawing, by means of a metered finish applicator, so that the spin-draw finish lubricated the yarn through the subsequent drawing and winding. The spin-draw finish contained 95% water and 5% non-water ingredients as an emulsion. The composition of the 5% non-aqueous portion is shown in the table of finishes. The dry weight of finish remaining on yarn after winding was determined to be 0.39% by weighing the methanol extract of the yarn.

The product spun filaments are subjected to a two-stage drawing process with the first stage drawing conducted at about 25°C and a draw ratio of 1.25; and with a second stage being conducted at elevated temperature in the range from about 175°C to about 245°C and at a draw ratio of 1.60. The PET was heat set at about 245°C and then wound at a speed of 4655 m/min (meters per minute) to obtain a slight (about 2%) relaxation. The drawn yarn was 1500 denier.

The drawn yarn was then rewound onto another bobbin at 300 m/min, with the yarn passing over a metered finish applicator and a topcoat applied to the yarn. The topcoat finish shown in the topcoat finish table, was metered onto the yarn at a rate of 2.2 ml/min (milliliters per minute), giving an add-on of 0.3% dry top-coat Ciba (94-105) on yarn.

The yarn was then twisted individually, then double-plied into cord with 3.5 turns/cm (8.9 turns/inch), which cord was then conventionally treated with a RFL dip at ambient temperature to a target dry dip pick-up level of 8% by weight. The treating conditions for the first zone is 160°C, for 10 seconds at a 1 % relax. The treating conditions for the second zone is 246°C, for 20 seconds at a 4.5% relax. The treated cord was used to reinforce test samples of uncured rubber and cured in a mold. The peel adhesion test pieces and tests were made as described earlier. The average force required to pull the sample apart at 22°C and at 120°C was recorded and averaged, and the amount of rubber coverage on the cords was estimated visually and rated. The results of testing the yam in this example were as follows and compared to the results of the same yarn, but with no Ciba 94-105 applied. The RFL composition used in each of the following examples is prepared as follows:

An RF resin solution is prepared by dissolving first 18.0 grams of 10% sodium hydroxide solution into 707.4 g of distilled water, then stirring in 33.0 g of resorcinol, then stirring in 48.7 g of 37% formaldeyde solution (Fisher Scientific, Pittsburg, Pennsylvania, USA). This solution was stirred for 5 minutes than left unstirred to polymerize for 6 hours.

The latex dispersion was prepared by stirring 585.1 g of a 41 % solids copolymer latex of butadiene/styrene/vinylpyridine (Gentac 118, Omnova Solutions Inc., Mogadore, Ohio, USA) into 177.0 g of distilled water, then stirring in 150.1 grams of a 40% solids latex of natural rubber.

With the latex stirring, the RF resin solution was added, stirred for 5 minutes, then 33.0 g of 28% aqueous ammonia stirred in. The RFL was stirred for 10 min, then left unstirred in a sealed container overnight.

The next day, Aerosol OT-75 (Cytek Industries, West Paterson, NJ, USA) (1.0 g) was stirred into 52.4 g of distilled water followed by 34.9 g of a 50% dispersion of GRILBOND IL-6(caprolactam-blocked diphenylmethylene di-isocyanate) (EMS-Chemie AG, Domat/Ems, Switzerland). This mixture was then added into the RFL dip with stirring, making 1840.6 g total dip. The dip was kept stirred while awaiting use and while in use. The dip was used on the day that the blocked di-isocyanate was added to the RFL.

Test results were as follows:

| Yarn | Adhesion Ibs (kg) | | Rubber Rating | |
|---|---|---|---|---|
| test temperature | 22°C | 120°C | 22°C | 120°C |
| with 94-105 top-coat | 49.9 (22.63) | 33.6 (15.24) | 6.5 | 6.8 |
| without top-coat | 49.5 (22.45) | 29.1 (13.20) | 6.5 | 4.5 |

### Example 2

In a manner analogous to that described in Example 1 hereinabove, molten PET as used therein is spun at about 304°C, and a spin-draw finish applied to the spun yarn after solidification and before drawing, by means of a kiss roll, so that the spin-draw finish lubricated the yarn through the subsequent drawing and winding. The spin-draw finish contained 85% of water and 15% by weight of non-water ingredients as an emulsion. The 15% non-aqueous finish portion is shown in the table of finish compositions. The dry weight of finish remaining on the yam after winding was 0.48% as determined above.

The spun filaments are subjected to a two-stage drawing process with the first stage drawing conducted at 115°C and a draw ratio of 3.45; and with a second stage being conducted at 125°C and at a draw ratio of 1.65. The PET was heat set at 230°C and then slightly relaxed at a speed of about 2440 m/min. The yarn was then wound onto bobbins. The drawn yarn was 1000 denier.

The drawn yarn was then rewound onto another bobbin at 525 m/min, with the yarn passing over a metered finish applicator and a topcoat applied to the yarn. The topcoat finish was as shown in the topcoat table. The topcoat was metered onto the yarn at a rate of 0.58 ml/min, giving an add-on of 1.0% topcoat solution, or 0.25% of dry ECN 9499 (Ciba Specialty Chemicals Corp., Tarrytown, NY, USA) on yarn.

The yarn was then twisted individually, double-plied into cord with 11.5 turns/in (4.53 turns/cm) and the cord treated with an RFL dip to a target dry dip pick-up level of 7% by weight. The treating conditions were the same as Example 1. The treated cord was used to produce test samples as described in Example 1 above, which samples were tested as described and compared to those obtained with the same yarn, but with no epoxy top-coat (ECN 9499) applied.

| Yarn | Adhesion Ibs (kg) | | Rubber Rating | |
|---|---|---|---|---|
| test temperature | 22°C | 120°C | 22°C | 120°C |
| with ECN 9499 top-coat | 77.8 (35.29) | 44.5 (20.18) | 4.0 | 2.3 |
| without top-coat | 73.8 (33.48) | 44.2 (20.05) | 3.3 | 2.0 |

### Example 3

Molten PET, intrinsic viscosity of 0.93 dl/g, and molten polybutylene terephthalate (PBT), intrinsic viscosity of 1.2 dl/g, were spun at a temperature of about 310°C, making a sheath/core heterofilament yarn with about 10% PBT as the sheath. A spin-draw finish, 95% water and 5% dry ingredients specified above for the finish for this Example 3, is applied to the spun yarn after solidification, and before drawing, by means of a metered finish applicator, so that the spin-draw finish lubricated the yam through the subsequent drawing and winding. The concentration of dry ingredients on the yarn after winding is 0.39%, as determined above.

In a manner analogous to that described in Example 1 hereinabove, the spun filaments are subjected to a two-stage drawing process with the first stage drawing conducted at about 25°C and a draw ratio of 1.21 and with a second stage being conducted at from about 175°C to 245°C and at a draw ratio of 1.60. The yarn was heat set at about 244°C and then wound at a speed of 4651 m/min to obtain a slight relaxation. The drawn yarn was 1000 denier.

The drawn yarn was then rewound onto another bobbin at 525 m/min with the yarn passing over a metered finish applicator and a topcoat applied to the yam. The topcoat finish was the same dry finish as used in Example 2 and metered at a rate of 0.58 ml/min, giving an add-on of 1.0% topcoat solution, or 0.25% ECN 9499 on yarn.

The yarn was then twisted individually, then double-plied into cord with 11.5 turns per inch (4.53 turns/cm) and treated with a RFL dip to a target dry dip pick-up level of 7% by weight. The treating conditions were the same as Example 1. The cord with the cured RFL was made into test pieces with uncured rubber and cured in a mold. Test results obtained as described in Example 1 above are compared to results obtained with the same yam, but with no top-coat (ECN 9499).

| Yarn | Adhesion Ibs (kg) | | Rubber Rating | |
|---|---|---|---|---|
| test temperature | 22°C | 120°C | 22°C | 120°C |
| with ECN 9499 top-coat | 76.4 (34.65) | 49.2 (22.32) | 10.0 | 7.8 |
| without top-coat | 64.6 (29.30) | 46.7 (21.18) | 4.8 | 6.3 |

### Example 4

In a manner analogous to that described in Example 1 hereinabove, molten PET as used therein is spun at about 310°C, and a spin-draw finish containing 92.5% water and 7.5% non-water ingredients as an emulsion, was applied. The composition of the 7.5% non-aqueous finish in this Example 4 is given above. The dry weight of finish on yarn after winding is 0.39%, as determined above.

The spun filaments are subjected to a two-stage drawing process with the first stage drawing conducted at about 25°C and a draw ratio of 1.22 and with a second stage being conducted at from about 175°C to 245°C and at a draw ratio of 1.60. The PET was heat set at about 245°C and then slightly relaxed at a speed of about 4969 m/min. The yarn was then wound onto bobbins. The drawn yarn was 1300 denier.

The drawn yarn was then rewound onto another bobbin at 525 m/min with the yarn passing over a finish applicator metering the topcoat used in Example 2 at a rate of 0.76 ml/min giving an add-on equal to 0.25% by weight of dry ECN 9499 on yarn.

The yarn was then twisted individually, double-plied into cord with 3.6 turns/cm (9.2 turns/in) and conventionally treated with a RFL dip to a target dry dip pick-up level of 7% by weight. The treating conditions were the same as in Example 1. The treated cord was used to produce test samples as described in Example 1 above, which samples were tested as described and compared to those obtained with the same yarn, but with no epoxy top-coat (ECN 9499), applied.

| Yarn | Adhesion Ibs (kg) | | Rubber Rating | |
|---|---|---|---|---|
| test temperature | 22°C | 120°C | 22°C | 120°C |
| with ECN 9499 top-coat | 77.6 (35.20) | 46.5 (21.09) | 6.3 | 3.3 |
| without top-coat | 69.7 (31.62) | 44.6 (20.23) | 3.5 | 1.8 |

### Example 5

Molten polyethylene terephthalate was spun and drawn as in Example 4.

As in Example 1, a spin-draw finish containing 92.5% water and 7.5% non-water ingredients as an emulsion, was applied. The composition of the 7.5% non-aqueous finish in this Example 5 is given above. The dry weight of finish on the yarn after winding is 0.33%, as determined above.

The drawn yarn was then rewound onto another bobbin at 525 m/min with the yarn passing over a finish applicator metering the topcoat used in Example 2 at a rate of 0.76 ml/min giving an add-on equal to 0.25% by weight of dry ECN 9499 on yarn.

The yarn was then twisted individually, double-plied into cord with 3.6 turns/cm (9.2 turns/in) and treated with a RFL dip to a target dry dip pick-up level of 7% by weight. The treating conditions were the same as in Example 1. The treated cord was used to produce test samples as described in Example 1 above, which samples were tested as described and compared to those obtained with the same yarn, but with no epoxy top-coat (ECN 9499) applied.

| Yarn | Adhesion Ibs (kg) | | Rubber Rating | |
|---|---|---|---|---|
| test temperature | 22°C | 120°C | 22°C | 120°C |
| with ECN 9499 top-coat | 69.5 (31.52) | 42.4 (19.23) | 2.5 | 1.1 |
| without top-coat | 63.6 (28.85) | 43.0 (19.50) | 2.0 | 1.0 |

### Example 6

In a manner analogous to that described in Example 1 hereinabove, molten PET as used therein is spun at about 310°C, and as in Example 1, a spin-draw finish containing 92.5% water and 7.5% non-water ingredients as an emulsion, was applied. The composition of the 7.5% non-aqueous finish in this Example 4 is given above. The dry weight of finish on the yarn after winding is 0.39%, as determined above.

The spun filaments are subjected to a two-stage drawing process with the first stage drawing conducted at about 25°C and a draw ratio of 1.18 and with a second stage being conducted at from about 175°C to about 245°C and at a draw ratio of 1.57. The PET was heat set at about 229°C and then slightly relaxed at a speed of about 5524 m/min. The yarn was then wound onto bobbins. The drawn yam was 1000 denier.

The drawn yam was then rewound onto another bobbin at 525 m/min with the yarn passing over a finish applicator metering the topcoat used in Example 2 at a rate of 0.58 ml/min giving an add-on equal to 0.25% by weight of dry ECN 9499 on yarn.

The 1000 denier yarn was then twisted individually, double-plied into cord with 4.5 turns/cm (11.5 turns/in) and treated with a RFL dip to a target dry dip pick-up level of 7% by weight. The treating conditions were the same as in Example 1. The treated cord was used to produce test samples as described in Example 1 above, which samples were tested as described and compared to those obtained with the same yarn, but with no epoxy top-coat (ECN 9499) applied.

| Yarn | Adhesion Ibs (kg) | | Rubber Rating | |
|---|---|---|---|---|
| test temperature | 22°C | 120°C | 22°C | 120°C |
| with ECN 9499 top-coat | 76.6 (34.75) | 43.9 (19.91) | 4.8 | 3.0 |
| without top-coat | 71.4 (32.39) | 42.8 (19.41) | 3.8 | 2.4 |

### Example 7

In a manner analogous to that described in Example 1 hereinabove, molten PET as used therein is spun at about 304°C, and a spin-draw finish applied to the spun yarn, as described hereinabove. The spin-draw finish specified above for this Example 7 is applied as described above so that the dry weight of finish remaining on the yarn was 0.39% as determined above.

The spun filaments are subjected to a two-stage drawing process as described above to produce a 1500 denier drawn yarn. The drawn yarn was then rewound onto another bobbin with the yam passing over a metered finish applicator and a topcoat applied to the yarn, giving an add-on of 0.30% dry topcoat on the yarn.

The 1500 denier yarn was twisted individually, double plied into a cord with 3.5 turns/cm (8.9 turns per inch) and treated with the RFL dip to a target dry dip pick-up level of 11 % by weight. The treating conditions were the same as in Example 1. The treated cord was used to produce test samples as described in Example 1 above, which samples were tested as described and compared to those obtained with the same yarn, but with no epoxy top-coat (ECN 9499) applied.

| Yarn | Adhesion Ibs (kg) | | Rubber Rating | |
|---|---|---|---|---|
| test temperature | 22°C | 120°C | 22°C | 120°C |
| with ECN 1400 top-coat | 46.7 (21.18) | 31.8 (14.42) | 5.6 | 4.5 |
| without top-coat | 42.8 (19.41) | 28.8 (13.06) | 4.9 | 3.9 |

### Example 8

Molten PET was spun and drawn as described in Example 4.

The spin-draw finish specified above for this Example 8 was applied as before. It contained 92.5% water and 7.5% non-water ingredients as an emulsion. The dry weight of finish on the yarn after winding was 0.37% as determined above. The spun filaments are subjected to a two-stage drawing process as described above to produce a 1300 denier drawn yarn. The drawn yarn was then rewound onto another bobbin with the yarn passing over a metered finish applicator and a topcoat applied to the yarn, giving an add-on of 0.25% dry ECN 9499 top-coat on the yarn.

The 1300 denier yam was twisted individually, double plied into a cord with 3.6 turns/cm (9.2 turns/in) and treated with the RFL dip to a target dry dip pick-up level of 10% by weight. The treating conditions were the same as in Example 1. The treated cord was used to produce test samples as described in Example 1 above, which samples were tested as described and compared to those obtained with the same yarn, but with no epoxy top-coat (ECN 9499) applied.

| Yarn | Adhesion Ibs (kg) | | Rubber Rating | |
|---|---|---|---|---|
| test temperature | 22°C | 120°C | 22°C | 120°C |
| with ECN 9499 top-coat | 41.2 (18.69) | 29.1 (13.20) | 2.4 | 4.0 |
| without top-coat | 35.0 (15.88) | 24.1 (10.93) | 0.6 | 1.0 |

In the following Examples 9 - 12, molten PET was spun and drawn as described in Example 1 above, and the same spin-draw finish used in Example 8 above, containing 92.5% water and 7.5% non-water ingredients, is applied as before, to provide a concentration of dry ingredients on the yarn, after winding, of 0.39%. The yarn was 1500 denier.

### Example 9

The drawn yam with 0.39% dry weight of finish, was then rewound onto another bobbin at 500 mpm (meters per minute), with the yarn passing over a finish applicator, metering the topcoat specified above for this Example 9, at a rate of 0.42 ml/min, giving an add-on equal to 0.25% by weight of Denacol EX 622 on yarn.

The yarn was twisted and double-plied into a cord with 3.5 turns/cm (8.9 turns/in) and treated with a RFL dip to a target dry dip pickup level of 7% by weight. The treating conditions were the same as in Example 1. The treated cord was used to produce test samples as described in Example 1, and these samples were tested as described and compared to those obtained with the same yarn, but with no epoxy topcoat (Denacol EX 622) applied.

| Yarn | Adhesion Ibs (kg) | | Rubber Rating | |
|---|---|---|---|---|
| test temperature | 22°C | 120°C | 22°C | 120°C |
| with Denacol EX 622 | 59.9 (27.17) | 32.9 (14.92) | 5.6 | 2.5 |
| Without top-coat | 45.6 (20.68) | 29.5 (13.38) | 1.0 | 1.6 |

### Example 10

The drawn yam with 0.39% dry weight of finish, was then rewound onto another bobbin at 500 mpm (meters per minute), with the yarn passing over a finish applicator, metering the topcoat specified above for this example 10, at a rate of 0.42 ml/min, giving an add-on equal to 0.25% by weight of Denacol EX 622 on yarn. The yarn was then twisted and double-plied into cord with 3.5 turns/cm and treated with a RFL dip to a target dry dip pickup level of 7% by weight. The treating conditions were the same as in Example 1.

The treated cord was used to produce test samples as described in Example 1, and these samples were tested as described and compared to those obtained with the same yarn, but with no epoxy topcoat (Denacol EX 622) applied.

| Yarn | Adhesion Ibs (kg) | | Rubber Rating | |
|---|---|---|---|---|
| test temperature | 22°C | 120°C | 22°C | 120°C |
| with Denacol EX 622 | 51.6 (23.41) | 32.2 (14.61) | 3.3 | 1.9 |
| without top-coat | 45.6 (20.68) | 29.5 (13.38) | 1.0 | 1.6 |

### Example 11

The drawn yam with 0.39% dry weight of finish, was then rewound onto another bobbin at 500 mpm (meters per minute), with the yarn passing over a finish applicator, metering the topcoat specified above for this example 11, at a rate of 0.84 ml/min, giving an add-on equal to 0.25% by weight of Araldite EPN 9880 CH on the yarn. The yarn was then twisted and double-plied into cord with 3.5 turns/cm and treated with a RFL dip to a target dry dip pickup level of 7% by weight. The treating conditions were the same as in Example 1.

The treated cord was used to produce test samples as described in example 1, and these samples were tested as described and compared to those obtained with the same yarn, but with no epoxy topcoat (Araldite EPN 9880 CH) applied.

| Yarn | Adhesion Ibs (kg) | | Rubber Rating | |
|---|---|---|---|---|
| test temperature | 22°C | 120°C | 22°C | 120°C |
| with EPN 9880 CH | 52.7 (23.90) | 30.9 (14.02) | 3.3 | 2.3 |
| without top-coat | 45.6 (20.68) | 29.5 (13.38) | 1.0 | 1.6 |

### Example 12

The drawn yarn with 0.39% dry weight of finish, was then rewound onto another bobbin at 500 mpm (meters per minute), with the yarn passing over a finish applicator, metering the topcoat specified above for this Example 12, at a rate of 0.84 ml/min, giving an add-on equal to 0.25% by weight of Araldite MY 721 on the yarn. The yarn was then twisted and double-plied into cord with 3.5 turns/cm and treated with a RFL dip to a target dry dip pickup level of 7% by weight. The treating conditions were the same as in Example 1.

The treated cord was used to produce test samples as described in Example 1, and these samples were tested as described and compared to those obtained with the same yam, but with no epoxy topcoat (Araldite MY 721) applied.

| Yarn | Adhesion Ibs (kg) | | Rubber Rating | |
|---|---|---|---|---|
| test temperature | 22°C | 120°C | 22°C | 120°C |
| with Araldite MY 721 | 57.3 (25.99) | 29.5 (13.38) | 4.4 | 2.0 |
| without top-coat | 45.6 (20.68) | 29.5 (13.38) | 1.0 | 1.6 |

### Comparative Example 13

To compare the adhesion of two commercial non-adhesive-activated spin-finishes with that obtained by the reactive finish of the '765 patent, both before and after being top-coated with an epoxide resin. Yarn was prepared according to Example 1, except the windup speed was 4821 m/min. A portion of this yam was divided into three groups A, B and C each approximately equal in amount to the other. Yarn from groups A and B were spin-finished with finishes formulated from U.S. Patent No. 3,730,892 to Allied Chemical Corporation, and Japanese patent application 9-158053 to Unitika Ltd. respectively, and yarn from group C was spin-finished with the '765 patent finish. None of the yarns was top-coated before being dipped in the same RFL bath before each was embedded in the same rubber and cured. The Allied and Unitika spin-finishes are duplicated as closely as was practical.

### Composition of an emulsion (Allied) used to spin-finish Group A:

| Component | Parts by weight |
|---|---|
| ®Pureco 76 (Abitec Corp., Columbus, Ohio, USA), coconut oil | 48 |
| ®Petronate L , sulfonate (95.5% active) (Witco Corp., Greenwich, Connecticut, USA) (oil soluble sulfonate salt) | 14.5 |
| POE(4)lauryl alcohol | 22 |
| ®Gerapon WS-25 dinonyl Na-sulfosuccinate (48% active) (Rhodia, Cranbury, NJ, USA) | 2 |
| POE(20) tallow amine | 8 |
| POE(25)hydrogenated castor oil trilaurate | 5.5 |

### Composition of an emulsion (Unitika) used to spin-finish Group B:

| Component | Parts by weight |
|---|---|
| oleyl oleate | 60 |
| POE(2)oleyl alcohol | 4 |
| POE(10)coco amine | 10 |
| POE(16)hydrogenated castor oil | 10 |
| POE(25)hydrogenated castor oil trilaurate | 15 |
| POE(8)oleyl phosphate-Na salt | 1 |

Composition of the '765 patent finish used to spin-finish Group C is the same as given in Example 1 above.

The results with no top-coat are listed in Table 1:

**TABLE 1**

| Spin-finish | Adhesion (Pulled) Ibs (kg) | | Rubber rating | |
|---|---|---|---|---|
| test temperature | 22°C | 120°C | 22°C | 120°C |
| Allied | 25.7 (11.66) | 19.7 (8.94) | 0 | 0 |
| Unitika | 29.6 (13.43) | 21.1 (9.57) | 0 | 0 |
| '765 patent | 75.9 (34.43) | 39.1 (17.74) | 7.5 | 3 |

The above test data indicate that, even without a top-coat, the '765 patent spin-finish provides higher values than with either the Allied or Unitika spin-finishes.

### Comparative Example 14

Three glycerol epoxy topcoats, 72162, 72163 and 72164 were formulated based on the disclosure in Japanese Patent Application No. 9-158053 have the following components:

| Component | 72162 | 72163 | 72164 |
|---|---|---|---|
| POE(10)coco amine | 8.44 | 8.48 | 7.25 |
| dioctyl Na-sulfosuccinate | 1.69 | 0.8 | 0.72 |
| POE(20)hydrogenated castor oil | 6.75 | 6.79 | 5.8 |
| polyethylene glycol, MW 1450 | 8.45 | 8.49 | 7.25 |
| Denacol EX-313, glycerol polyglycidyl ether | 67.56 | 68.29 | 58.4 |
| Z-6040 glycidoxypropyl trimethoxysilane (Dow Corning Corp., Midland, Michigan, USA) | 7.11 | 7.15 | 6.13 |
| IL-6 (50% active - adjust) blocked isocyanate | | | 14.45 |

The following results are obtained using the above three glycerol epoxy topcoats, 72162, 72163 and 72164 over each of the three different spin-draw finishes used in Table 1 above, using the same base yarn. The ending dry weight of spin-draw finish on each yarn was: A: 0.37% & 0.25%; B: 0.37% & 0.25%; C: 0.39%. Each spin-draw yarn was identically top-coated with 0.22% of topcoat 72162, 0.16% of topcoat 72163 and 0.21 % of topcoat 72164 (all based on dry weight of topcoat on yarn). The treated cord results are listed in the following Table 2:

**TABLE 2**

| With 72162 as a top-coat: | | | | |
|---|---|---|---|---|
| Spin-finish | Adhesion (Pulled) lbs (kg) | | Rubber rating | |
| test temperature | 22°C | 120°C | 22°C | 120°C |
| "A" Allied | 60.6 (27.49) | 39.3 (17.83) | 7.0 | 4.0 |
| "B" Unitika | 71.5 (32.43) | 42.1 (19.10) | 7.5 | 5.0 |
| "C" '765 patent | 65.3 (29.62) | 40.4 (18.33) | 9.0 | 5.0 |

| With 72163 as a top-coat: | | | | |
|---|---|---|---|---|
| Spin-finish | Adhesion (Pulled) lbs (kg) | | Rubber rating | |
| test temperature | 22°C | 120°C | 22°C | 120°C |
| "A" Allied | 73.1 (33.16) | 40.5 (18.37) | 8.0 | 5.0 |
| "B" Unitika | 65.8 (29.85) | 40.2 (18.23) | 7.5 | 5.5 |
| "C" '765 patent | 78.9 (35.79) | 46.2 (20.96) | 9.0 | 6.0 |

| With 72164 as a top-coat: | | | | |
|---|---|---|---|---|
| Spin-finish | Adhesion (Pulled) lbs (kg) | | Rubber rating | |
| test temperature | 22°C | 120°C | 22°C | 120°C |
| "A" Allied | 64.2 (29.12) | 38.8 (17.60) | 8.5 | 6.0 |
| "B" Unitika | 79.4 (36.02) | 46.4 (21.05) | 9.0 | 7.0 |
| "C" '765 patent | 76.9 (34.88) | 44.5 (20.18) | 9.0 | 6.0 |

Table 2 indicates that all spin finish coatings have improved adhesion by top coating with an epoxy composition.

## Claims

1. A polyester yarn coated with a first coating of a reaction product of a halohydroxy organic compound and a salt of a weak acid, **characterized by** a second coating over said first coating, of an epoxy resin having at least two epoxide groups, said resin being present in an amount in the range from 0.001 % to 1.0% by weight of said yarn.

2. The polyester yarn of claim 1 wherein said epoxy resin is selected from
(i) polyglycidyl ethers having three or more glycidyl ether groups and derived from polyol having from 3 to 15 carbon atoms, or a polyphenol having from 2 to 20 repeating units;
(ii) an epoxy novolac resin having the structure 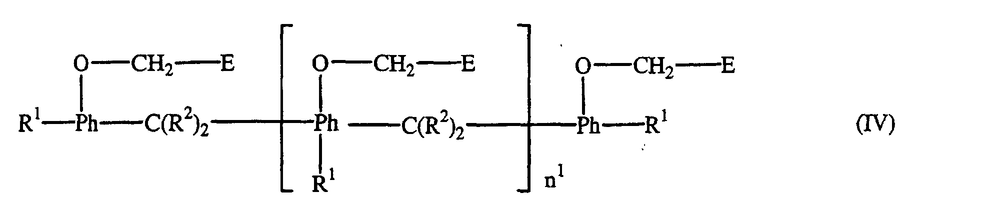 where Ph represents a phenyl ring, and
E represents an epoxide ring 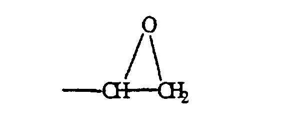
R¹ is a substituent on the phenyl ring, and represents hydrogen, halogen, alkyl or aryl, preferably C₁ - C₄ alkyl;
R² represents hydrogen, alkyl, aryl, or an aryl group substituted by glycidyl ether;
and n¹ has a value not less than 0, preferably in the range from 0.1 to 5;
(iii) a polyfunctional epoxide having the structure 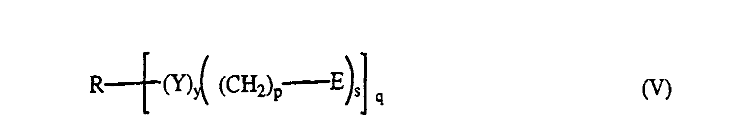 wherein R is an aromatic, aliphatic, or aralkyl radical which is substituted or unsubstituted;
E represents an epoxide ring;
Y is a heteroatom selected from O, N and S;
y represents zero or 1;
p represents an integer in the range from 1 to 6;
q represents an integer in the range from 2 to 12; and
s represents 1 or 2;
(iv) diglycidyl ethers having the structure 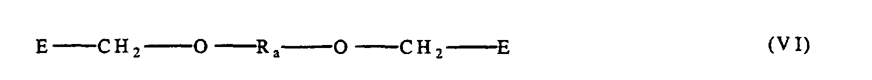 wherein Rₐ represents alkylene or arylene; and,
E represents an epoxide; and,
(v) a bisphenol-A based resin having a structure 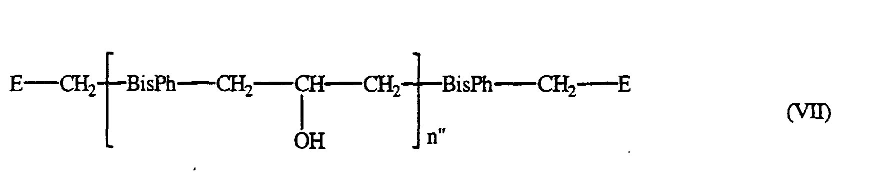
where BisPh represents O - Ph - C(Me)₂ - Ph - O,
E represents an epoxide ring
Me represents a methyl group, and
n" has a value in the range from 0.1 to 5.

3. The polyester yarn of claim 2, wherein said epoxy resin is present in the range from 0.001% to 0.5% by weight of said yarn.

4. The polyester yarn of claim 2 or 3 wherein said halohydroxy organic compound has primary halogen and hydroxyl functionalities, wherein its halohydrin value is less than or equal to 1.7% and its epoxy value is less than or equal to 0.36%.

5. The polyester yarn of claim 2, 3 or 4, wherein said epoxy resin is selected from the group of polyglycidyl ethers of polyols.

6. The polyester yarn of one of claims 2 to 5, wherein said polyglycidyl ethers of polyols are glycerol polyglycidyl ether, sorbitol polyglycidyl ether, and polyglycerol polyglycidyl ether.

7. The polyester yarn of one of claims 2 to 6, wherein said epoxy resin is selected from the structure 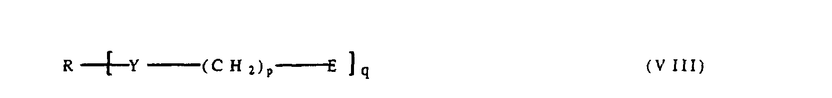 and, 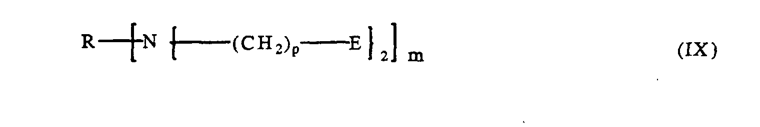 wherein R is an aromatic, aliphatic or aralkyl radical which is substituted or unsubstituted,
E represents an epoxide ring;
Y is a heteroatom selected from O and S;
m represents an integer in the range from 1 to 4;
p represents an integer in the range from 1 to 6; and
q represents an integer in the range from 2 to 12.

8. The polyester yarn of claim 7, wherein said epoxy resin is selected from the group consisting of an epoxy phenol novolac, an epoxy cresol novolac, a tetraglycidyl ether of glyoxal phenol novolac, polybutadiene polyepoxide, tris(hydroxyphenyl) methane epoxide, and an amino-epoxy having at least one glycidyl ether substituent, each epoxy resin having a molecular weight in the range from 300 to 5000.

9. The polyester yarn of claim 7 or 8, wherein said epoxy resin has from 2 to 4 amino-epoxy terminal groups, and, R is an aromatic amine in which the N positions are fully substituted with glycidyl groups.

10. The polyester yarn of one of claims 1 to 9, wherein the coating contains no hardener.

11. A process for modifying the surface of spun polyester yarn, comprising: coating said yam with a reaction product of a halohydroxy organic compound and a salt of a weak acid; drawing said yam; heat-setting said yarn; and coating said heat set yarn with a polyepoxide having at least two epoxide groups.

12. The process of claim 11, which comprises coating said polyepoxide at a temperature in the range from 20°C to 100°C.

13. The process of claim 11 or 12, wherein said polyepoxide is present in an amount from 0.001 % to 1.0% be weight of said yarn, and is represented by a structure selected from
(i) polyglycidyl ethers having three or more glycidyl ether groups and derived from polyol having from 3 to 15 carbon atoms, or a polyphenol having from 2 to 20 repeating units;
(ii) an epoxy novolac resin having the structure 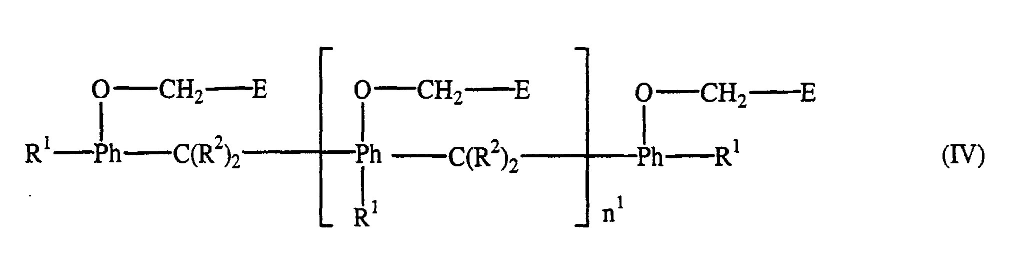 where Ph represents a phenyl ring, and
E represents an epoxide ring 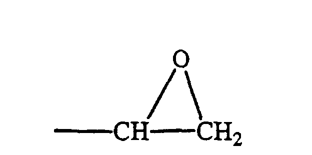
R¹ is a substituent on the phenyl ring, and represents hydrogen, halogen, alkyl or aryl, preferably C1 - C4 alkyl;
R² represents hydrogen, alkyl, aryl, or an aryl group substituted by glycidyl ether;
and n¹ has a value not less than 0, preferably in the range from 0.1 to 5;
(iii) a polyfunctional epoxide having the structure 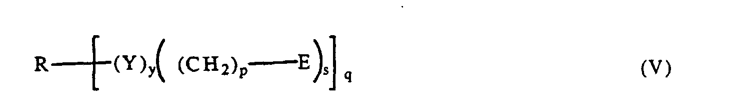 wherein R is an aromatic, aliphatic, or aralkyl radical which is substituted or unsubstituted;
E represents an epoxide ring;
Y is a heteroatom selected from O, N and S;
y represents zero or 1;
p represents an integer in the range from 1 to 6;
q represents an integer in the range from 2 to 12; and
s represents 1 or 2;
(iv) diglycidyl ethers having the structure 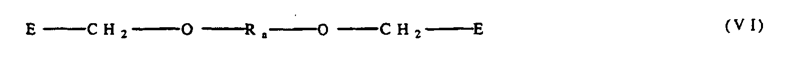 wherein Rₐ represents alkylene or arylene; and, E represents an epoxide; and,
(v) a bisphenol-A based resin having a structure 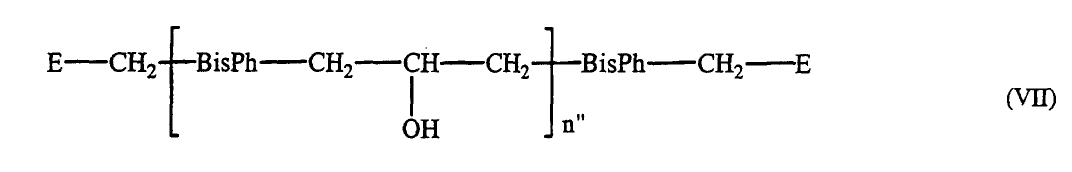 where BisPh represents 0 - Ph - C(Me)₂ - Ph - O,
E represents an epoxide ring
Me represents a methyl group, and
n" has a value in the range from 0.1 to about 5.

14. The process of claim 11, 12 or 13, wherein said step of coating with said polyepoxide includes a solvent which is non-volatile in the range from 38°C to 200°C.

15. The process according to one of claims 11 to 14, wherein said polyepoxide is soluble up to at least 10% by weight of solution, in a liquid organic solvent free of a reactive OH group.

16. The process of one of claims 11 to 15, wherein said polyepoxide in said coating is present in an aqueous dispersion of finely divided particles smaller than 2 microns.

17. A composite comprising: a coated polyester yarn in a rubber article, said coated polyester yarn having a first coating of a reaction product of a halohydroxy organic compound and salt of a weak acid; a second coating, over said first coating, of an epoxy resin having at least two epoxy groups, said resin being present in an amount in the range of from 0.001% to 1.0% by weight of said yarn; and a third coating over said second coating of a cured resorcinol-formaldehyde-latex (RFL) dip.

18. The composite of claim 17, wherein said epoxy resin is represented by a structure selected from
(i) polyglycidyl ethers having three or more glycidyl ether groups and derived from polyol having from 3 to 15 carbon atoms, or a polyphenol having from 2 to 20 repeating units;
(ii) an epoxy novolac resin having the structure 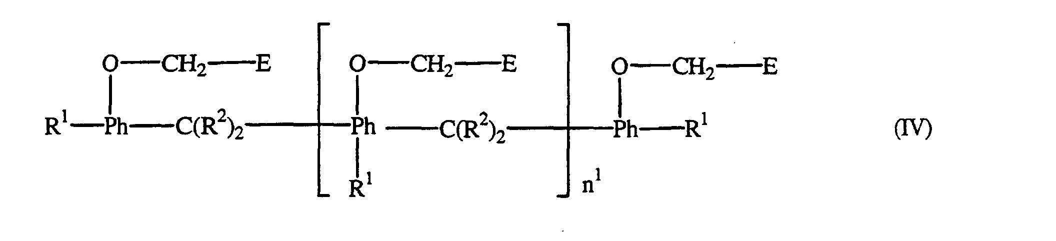 where Ph represents a phenyl ring, and
E represents an epoxide ring 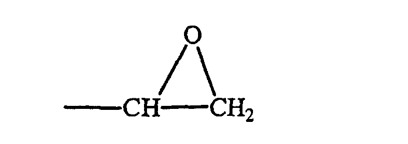
R¹ is a substituent on the phenyl ring, and represents hydrogen, halogen, alkyl or aryl, preferably C₁ - C₄ alkyl;
R² represents hydrogen, alkyl, aryl, or an aryl group substituted by glycidyl ether;
and n¹ has a value not less than 0, preferably in the range from 0.1 to 5;
(iii) a polyfunctional alkylene epoxide having the structure 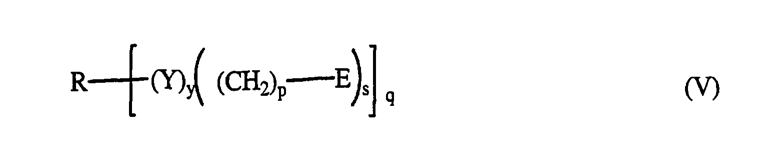 wherein R is an aromatic, aliphatic, aralkyl radical which is substituted or unsubstituted,
E represents an epoxide ring;
Y is a heteroatom selected from O, N and S;
y represents zero or 1;
p represents an integer in the range from 1 to 6;
q represents an integer in the range from 2 to 12; and
s represents 1 or 2;
(iv) diglycidyl ethers having the structure 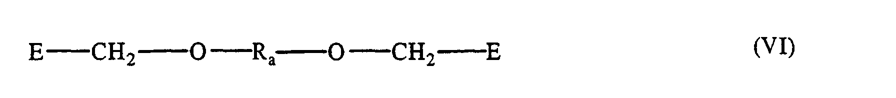 wherein Rₐ represents alkylene or arylene; and, E represents an epoxide; and,
(v) a bisphenol-A based resin having a structure 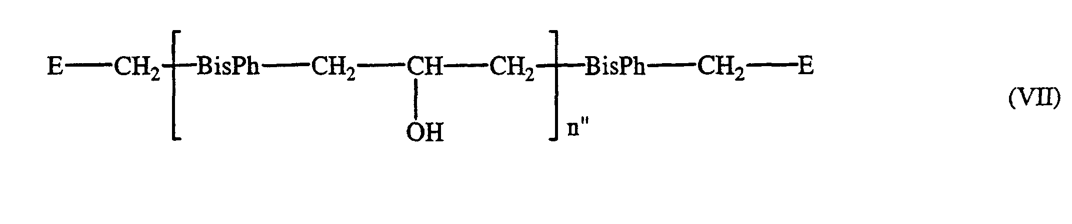
where BisPh represents O - Ph - C(Me)₂ - Ph - O,
E represents an epoxide ring
Me represents a methyl group, and
n" has a value in the range from 0.1 to about 5.

19. The composite of claim 17, wherein said epoxy resin is selected from the group consisting of the structure 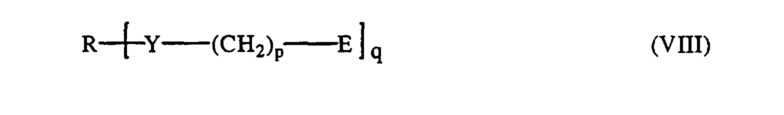 and 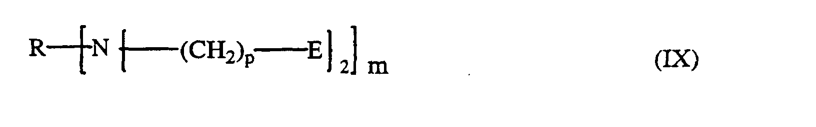 wherein R is an aromatic, aliphatic or aralkyl radical which is substituted or unsubstituted;
E represents an epoxide ring;
Y is a heteroatom selected from O and S;
m represents an integer in the range from 1 to 4;
p represents an integer in the range from 1 to 6; and
q represents an integer in the range from 2 to 12.

20. A composite of claim 19, wherein said epoxy resin is selected from the group consisting of an epoxy phenol novolac, an epoxy cresol novolac, a tetraglycidyl ether of glyoxal phenol novolac, polybutadiene polyepoxide a tris(hydroxyphenyl) methane epoxide, and an amino-epoxy having at least one glycidyl ether substituent, each epoxy resin having a molecular weight in the range from 300 to 5000.

21. The composite of claim 19 or 20, wherein said epoxy resin has from 2 to 4 amino-epoxy terminal groups, and, R is an aromatic amine in which the N positions are fully substituted with glycidyl groups.

22. The composite of one of claims 18 to 21, wherein said halohydroxy organic compound has primary halogen and hydroxyl functionalities, wherein its halohydrin value is less than or equal to 1.7% and its epoxy value is less than or equal to 0.36%.

23. The composite of one of claims 18 to 22, wherein said polyglycidyl ethers of polyester are glycerol polyglycidyl ether, sorbitol polyglycidyl ether, and polyglycerol polyglycidyl ether.

24. The composite of one of claims 17 to 23, wherein the coating contains no hardener.

25. A tire comprising a coated polyester yarn in a rubber tire, said coated polyester yarn being coated with a first coating of a reaction product of a halohydroxy organic compound and salt of a weak acid and a second coating, over said first coating, of an epoxy resin having at least two epoxy groups, said resin being present in an amount in the range of from 0.001% to 1.0% by weight of said yarn and a third coating over said second coating of a cured resorcinol-formaldehyde-latex (RFL) dip.

## Patentansprüche

1. Polyesterfaden mit einer ersten Beschichtung aus einem Umsetzungsprodukt aus einer organischen Halogenhydroxyverbindung und einem Salz einer schwachen Säure, **gekennzeichnet durch** eine auf der ersten Beschichtung aufgetragene zweite Beschichtung aus einem Epoxidharz mit mindestens zwei Epoxidgruppen, wobei das Epoxidharz in einer Menge von 0,001 bis 1,0 Gew.-%, bezogen auf Fadengewicht vorliegt.

2. Polyesterfaden nach Anspruch 1, bei dem das Epoxidharz unter
(i) Polyglycidylethern mit drei oder mehr Glycidylethergruppen aus einem Polyol mit 3 bis 15 Kohlenstoffatomen oder einem Polyphenyol mit 2 bis 20 wiederkehrenden Einheiten,
(ii) Epoxidnovolakharz entsprechend der Struktur 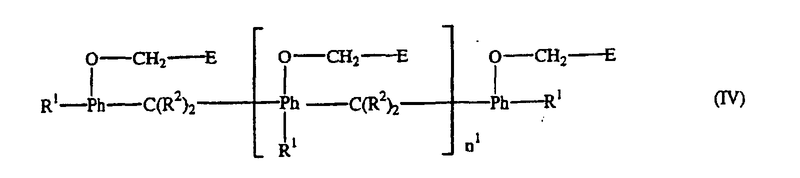 wobei
Ph für einen Phenylring und
E für einen Epoxidring 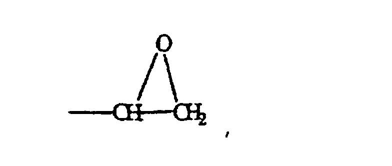
R¹ als Substituent am Phenylring für Wasserstoff, Halogen, Alkyl oder Aryl und bevorzugt für C₁-C₄-Alkyl,
R² für Wasserstoff, Alkyl, Aryl oder eine durch Glycidylether substituierte Arylgruppe und n¹ für eine Zahl größer 0 und bevorzugt im Bereich von 0,1 bis 5 steht,
(iii) polyfunktionellem Epoxid entsprechend der Struktur 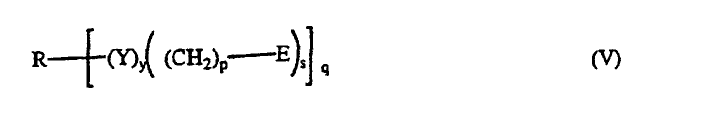 wobei
R für einen gegebenenfalls substituierten aromatischen, aliphatischen oder Aralkylrest,
E für einen Epoxidring,
Y für ein unter O, N und S ausgewähltes Heteroatom,
y für 0 oder 1,
p für eine ganze Zahl von 1 bis 6,
q für eine ganze Zahl von 2 bis 12 und
s für 1 oder 2 steht,
(iv) Diglycidylethern entsprechend der Struktur 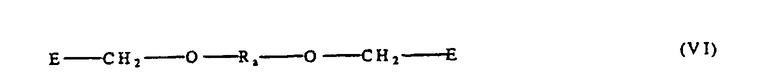 wobei Rₐ Alkylen oder Arylen und
E für ein Epoxid steht, und
(v) auf Bisphenol A basierendem Harz entsprechend der Struktur 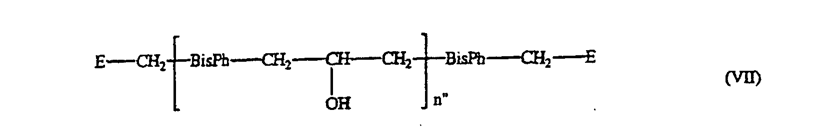 wobei BisPh für O - Ph - C(Me)₂ - Ph - O,
E für einen Epoxidring,
Me für eine Methylgruppe und
n" für einen Wert im Bereich von 0,1 bis 5 steht,
ausgewählt ist.

3. Polyesterfaden nach Anspruch 2, bei dem das Expoxidharz mit 0,001 bis 0,5 Gew.-%, bezogen auf Fadengewicht, vorliegt.

4. Polyesterfaden nach Anspruch 2 oder 3, bei dem die organische Halogenhydroxyverbindung primäre Halogen- und Hydroxyfunktionalitäten aufweist, wobei ihr Halogenhydrinwert höchstens 1,7% und ihr Epoxidwert höchstens 0,36% beträgt.

5. Polyesterfaden nach Anspruch 2, 3 oder 4, bei dem das Epoxidharz unter Polyglycidylethern der Polyole ausgewählt ist.

6. Polyesterfaden nach einem der Ansprüche 2 bis 5, bei dem die Gruppe der Polyglycidylether der Polyole Glycerinpolyglycidylether, Sorbitpolyglycidylether und Polyglycerinpolyglycidylether umfaßt.

7. Polyesterfaden nach einem der Ansprüche 2 bis 6, bei dem das Epoxidharz unter den Strukturen 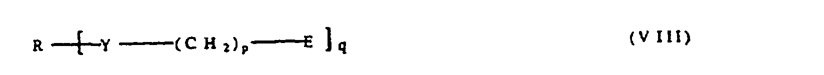 und 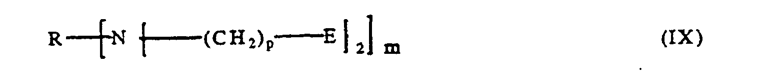 ausgewählt ist, wobei R für einen gegebenenfalls substituierten aromatischen, aliphatischen oder Aralkylrest,
E für einen Epoxidring,
Y für ein unter O und S ausgewähltes Heteroatom,
m für eine ganze Zahl von 1 bis 4,
p für eine ganze Zahl von 1 bis 6 und
q für eine ganze Zahl von 2 bis 12
steht.

8. Polyesterfaden nach Anspruch 7, bei dem das Epoxidharz unter Epoxidphenolnovolak, Epoxidkresolnovolak, Tetraglycidylether des Glyoxylphenolnovolaks, Polybutadienpolyepoxid, Tris(hydroxyphenyl)methanepoxid und mindestens einfach durch Glycidylether substituiertem Aminoepoxid ausgewählt ist, wobei die Epoxidharze jeweils ein Molekulargewicht von 300 bis 5000 aufweisen.

9. Polyesterfaden nach Anspruch 7 oder 8, bei dem das Epoxidharz 2 bis 4 endständige Aminoepoxidgruppen aufweist und für R ein an den N-Positionen mit Glycidylgruppen vollsubstituiertes aromatisches Amin steht.

10. Polyesterfaden nach einem der Ansprüche 1 bis 9, bei dem die Beschichtung kein Härtungsmittel enthält.

11. Verfahren zur Modifizierung der Oberfläche eines Polyesterspinnfadens, bei dem man den Faden mit einem Umsetzungsprodukt aus einer organischen Halogenhydroxyverbindung und einem Salz einer schwachen Säure beschichtet, verstreckt, thermofixiert und mit einem mindestens zwei Epoxidgruppen aufweisenden Polyepoxid beschichtet.

12. Verfahren nach Anspruch 11, bei dem man mit dem Polyepoxid bei einer Temperatur von 20°C bis 100°C beschichtet.

13. Verfahren nach Anspruch 11 oder 12, bei dem das Polyepoxid mit 0,001 bis 1,0 Gew.-%, bezogen auf Fadengewicht, vorliegt und einer Struktur aus der Reihe
(i) Polyglycidylether mit drei oder mehr Glycidylethergruppen aus einem Polyol mit 3 bis 15 Kohlenstoffatomen oder einem Polyphenyol mit 2 bis 20 wiederkehrenden Einheiten,
(ii) Epoxidnovolakharz entsprechend der Struktur 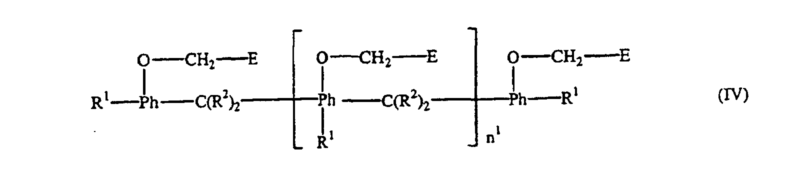 wobei
Ph für einen Phenylring und
E für einen Epoxidring 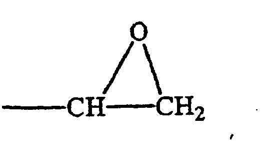
R¹ als Substituent am Phenylring für Wasserstoff, Halogen, Alkyl oder Aryl und bevorzugt für C₁-C₄-Alkyl,
R² für Wasserstoff, Alkyl, Aryl oder eine durch Glycidylether substituierte Arylgruppe und n¹ für eine Zahl größer 0 und bevorzugt im Bereich von 0,1 bis 5 steht,
(iii) polyfunktionelles Epoxid entsprechend der Struktur 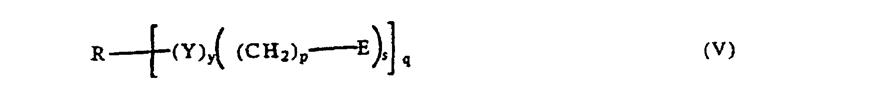 wobei
R für einen gegebenenfalls substituierten aromatischen, aliphatischen oder Aralkylrest,
E für einen Epoxidring,
Y für ein unter O, N und S ausgewähltes Heteroatom,
y für 0 oder 1,
p für eine ganze Zahl von 1 bis 6,
q für eine ganze Zahl von 2 bis 12 und
s für 1 oder 2 steht,
(iv) Diglycidylether entsprechend der Struktur 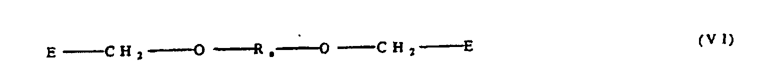 wobei Rₐ Alkylen oder Arylen und
E für ein Epoxid steht, und
(v) auf Bisphenol A basierendes Harz entsprechend der Struktur 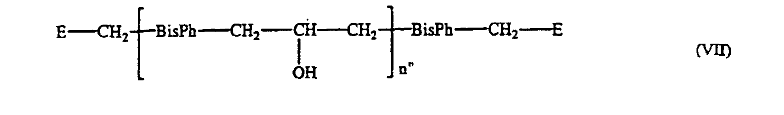
wobei BisPh für O - Ph - C(Me)₂ - Ph - O,
E für einen Epoxidring,
Me für eine Methylgruppe und
n" für einen Wert im Bereich von 0,1 bis etwa 5 steht,
entspricht.

14. Verfahren nach Anspruch 11, 12 oder 13, bei dem man mit dem Polyepoxid unter Zusatz eines im Bereich von 38°C bis 200°C nichtflüchtigen Lösungsmittels beschichtet.

15. Verfahren nach einem der Ansprüche 11 bis 14, bei dem sich das Polyepoxid in einem von reaktiven OH-Gruppen freien flüssigen organischen Lösungsmittel mit mindestens 10 Gew.-% löst, bezogen auf die Lösung.

16. Verfahren nach einem der Ansprüche 11 bis 15, bei dem das Polyepoxid als wäßrige Dispersion feiner, weniger als 2 Mikron kleiner Teilchen in der Beschichtung vorliegt.

17. Verbundkörper, enthaltend: einen beschichteten Polyesterfaden in einem Gummierzeugnis, wobei der beschichtete Polyesterfaden eine erste Beschichtung aus einem Umsetzungsprodukt aus einer Halogenhydroxyverbindung und einem Salz einer schwachen Säure, eine auf der ersten Beschichtung aufgetragene zweite Beschichtung aus einem Epoxidharz mit mindestens zwei Epoxidgruppen in einer Menge von 0,001 bis 1,0 Gew.-%, bezogen auf das Fadengewicht, und eine auf der zweiten Beschichtung aufgebrachte dritte Beschichtung aus einem ausgehärteten Resorcin-Formaldehyd-Latex-Dip (RFL) aufweist.

18. Verbundkörper nach Anspruch 17, bei dem das Epoxidharz unter
(i) Polyglycidylethern mit drei oder mehr Glycidylethergruppen aus einem Polyol mit 3 bis 15 Kohlenstoffatomen oder einem Polyphenyol mit 2 bis 20 wiederkehrenden Einheiten,
(ii) Epoxidnovolakharz entsprechend der Struktur 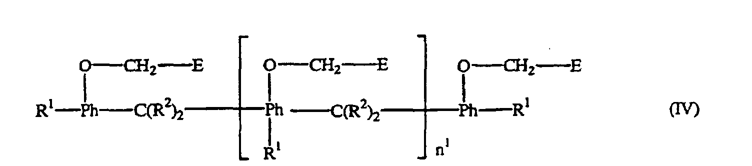 wobei
Ph für einen Phenylring und
E für einen Epoxidring 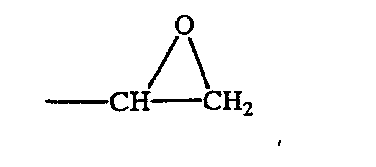
R¹ als Substituent am Phenylring für Wasserstoff, Halogen, Alkyl oder Aryl und bevorzugt für C₁-C₄-Alkyl,
R² für Wasserstoff, Alkyl, Aryl oder eine durch Glycidylether substituierte Arylgruppe und n¹ für eine Zahl größer 0 und bevorzugt im Bereich von 0,1 bis 5 steht,
(iii) polyfunktionellen Epoxid entsprechend der Struktur 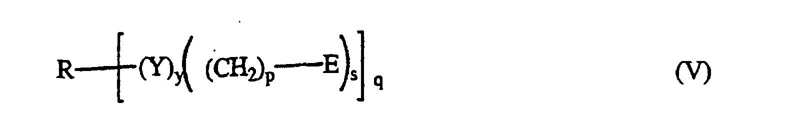 wobei
R für einen gegebenenfalls substituierten aromatischen, aliphatischen oder Aralkylrest,
E für einen Epoxidring,
Y für ein unter O, N und S ausgewähltes Heteroatom,
y für 0 oder 1,
p für eine ganze Zahl von 1 bis 6,
q für eine ganze Zahl von 2 bis 12 und
s für 1 oder 2 steht,
(iv) Diglycidylethern entsprechend der Struktur 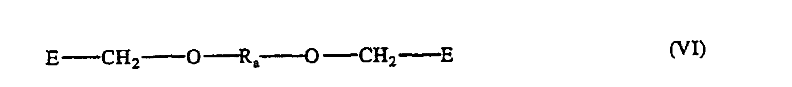 wobei Rₐ Alkylen oder Arylen und
E für ein Epoxid steht, und
(v) auf Bisphenol A basierenden Harz entsprechend der Struktur 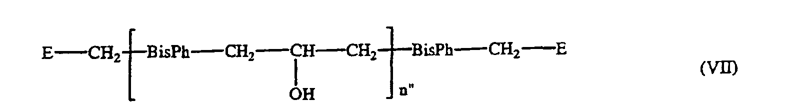
wobei BisPh für O - Ph - C(Me)₂ - Ph - O,
E für einen Epoxidring,
Me für eine Methylgruppe und
n" für einen Wert im Bereich von 0,1 bis etwa 5 steht,
ausgewählt ist.

19. Verbundkörper nach Anspruch 17, bei dem das Epoxidharz unter den Strukturen 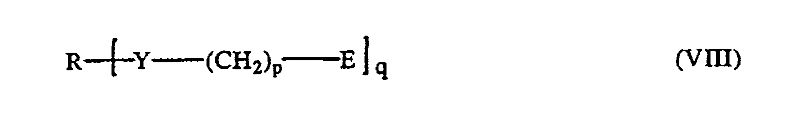 und 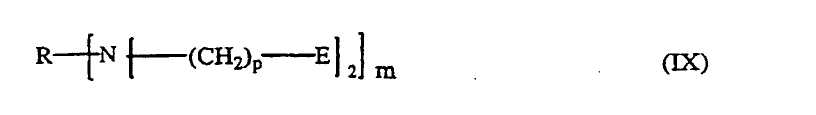 ausgewählt ist, wobei R für einen gegebenenfalls substituierten aromatischen, aliphatischen oder Aralkylrest,
E für einen Epoxidring,
Y für ein unter O und S ausgewähltes Heteroatom,
m für eine ganze Zahl von 1 bis 4,
p für eine ganze Zahl von 1 bis 6 und
q für eine ganze Zahl von 2 bis 12 steht.

20. Verbundkörper nach Anspruch 19, bei dem das Epoxidharz unter Epoxidphenolnovolak, Epoxidkresolnovolak, Tetraglycidylether des Glyoxylphenolnovolaks, Polybutadienpolyepoxid, Tris(hydroxyphenyl)methanepoxid und mindestens einfach durch Glycidylether substituiertem Aminoepoxid ausgewählt ist, wobei die Epoxidharze jeweils ein Molekulargewicht von 300 bis 5000 aufweisen.

21. Verbundkörper nach Anspruch 19 oder 20, bei dem das Epoxidharz 2 bis 4 endständigen Aminoepoxidgruppen aufweist und für R ein an den N-Positionen mit Glycidylgruppen vollsubstituiertes aromatisches Amin steht.

22. Verbundkörper nach einem der Ansprüche 18 bis 21, bei dem die organische Halogenhydroxyverbindung primäre Halogen- und Hydroxyfunktionalitäten aufweist, wobei ihr Halogenhydrinwert höchstens 1,7% und ihr Epoxidwert höchstens 0,36% beträgt.

23. Verbundkörper nach einem der Ansprüche 18 bis 22, bei dem die Gruppe der Polyglycidylether von Polyester Glycerinpolyglycidylether, Sorbitpolyglycidylether und Polyglycerinpolyglycidylether umfaßt.

24. Verbundkörper nach einem der Ansprüche 17 bis 23, bei dem die Beschichtung kein Härtungsmittel enthält.

25. Reifen mit einem beschichteten Polyesterfaden in einem Gummireifen, wobei der beschichtete Polyesterfaden eine erste Beschichtung aus einem Umsetzungsprodukt aus einer Halogenhydroxyverbindung und einem Salz einer schwachen Säure, eine auf der ersten Beschichtung aufgetragene zweite Beschichtung aus einem Epoxidharz mit mindestens zwei Epoxidgruppen in einer Menge von 0,001 bis 1,0 Gew.-%, bezogen auf das Fadengewicht, und eine auf der zweiten Beschichtung aufgebrachte dritte Beschichtung aus einem ausgehärteten Resorcin-Formaldehyd-Latex-Dip (RFL) aufweist.

## Revendications

1. Fil de polyester revêtu d'une première couche faite d'un produit de réaction d'un composé organique halohydroxy et d'un sel d'acide faible, **caractérisé par** la présence, au-dessus de ladite première couche, d'une seconde couche faite d'une résine époxy comportant au moins deux groupes époxyde, ladite résine étant présente en proportion comprise entre 0,001 % et 1,0 % en poids dudit fil.

2. Fil de polyester selon la revendication 1, où ladite résine époxy est sélectionnée à partir de :
(i) polyglycidyléthers, comportant trois groupes ou davantage de glycidyléther et dérivés d'un polyol possédant de 3 à 15 atomes de carbone ou d'un polyphénol possédant de 2 à 20 unités de répétition ;
(ii) une résine de novolaque d'époxy présentant la structure 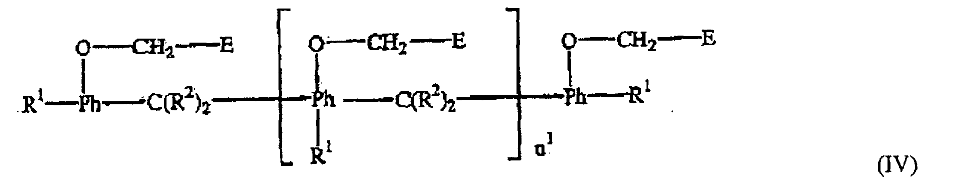 où : Ph représente un cycle phényle ;
E représente un cycle d'époxyde ; 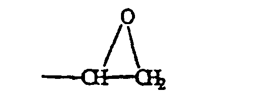
R¹ est un substituant sur le cycle de phényle et représente l'hydrogène, un halogène, un alkyle ou un aryle, de préférence un alkyle en C₁ - C₄ ;
R² représente l'hydrogène, un alkyle ou un aryle, ou encore un groupe aryle substitué par un glycidyléther ;
n¹ a une valeur non inférieure à 0, et de préférence comprise entre 0,1 et 5 ;
(iii) un époxyde polyfonctionnel présentant la structure 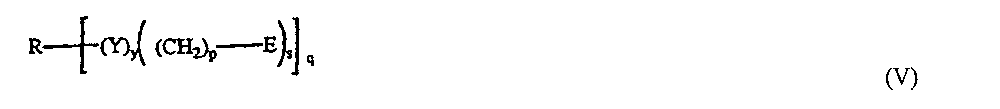 où : R est un radical aromatique, aliphatique ou aralkyle, substitué ou non substitué;
E représente un cycle d'époxyde ;
Y est un hétéroatome sélectionné parmi les éléments O, N et S ;
y représente 0 ou 1 ;
p représente un nombre entier compris entre 1 et 6 ;
q représente un nombre entier compris entre 2 et 12 ;
s représente 1 ou 2 ;
(iv) diglycidyléthers présentant la structure : 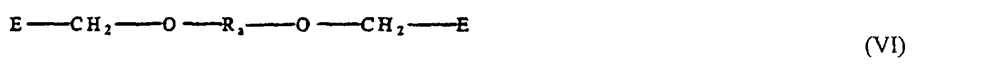 où : Rₐ représente l'alkylène ou l'arylène ;
E représente un époxyde ;
(v) une résine à base de bisphénol-A, présentant la structure 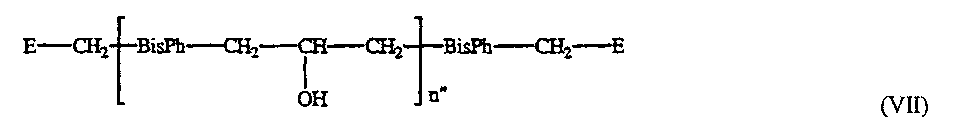
où : BisPh représente : O-Ph-C(Me)₂-Ph-O ;
E représente un cycle d'époxyde ;
Me représente un groupe méthyle ;
n" a une valeur comprise entre 0,1 et 5.

3. Fil de polyester selon la revendication 2, où ladite résine époxy est présente en proportion comprise entre 0,001 % et 0,5 % en poids dudit fil.

4. Fil de polyester selon la revendication 2 ou 3, où ledit composé organique halohydroxy possède des fonctionnalités halogène et hydroxyle primaires, sa valeur d'halohydrine étant inférieure ou égale à 1,7 % et sa valeur d'époxy inférieure ou égale à 0,36 %.

5. Fil de polyester selon la revendication 2, 3 ou 4, où ladite résine époxy est sélectionnée à partir du groupe des polyglycidyléthers de polyols.

6. Fil de polyester selon l'une des revendications 2 à 5, où lesdits polyglycidyléthers de polyols sont : le polyglycidyléther de glycérol, le polyglycidyléther de sorbitol et le polyglycidyléther de polyglycérol.

7. Fil de polyester selon l'une des revendications 2 à 6, où ladite résine époxy est sélectionnée à partir de la structure 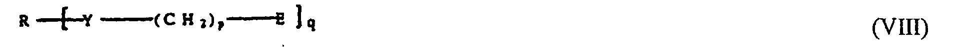 et 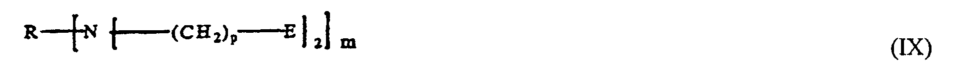 où : R est un radical aromatique, aliphatique ou aralkyle, substitué ou non substitué ;
E représente un cycle d'époxyde ;
Y est un hétéroatome sélectionné parmi les éléments O et S ;
m représente un nombre entier compris entre 1 et 4 ;
p représente un nombre entier compris entre 1 et 6 ;
q représente un nombre entier compris entre 2 et 12.

8. Fil de polyester selon la revendication 7, où ladite résine époxy est sélectionnée à partir du groupe constitué par une novolaque d'époxyphénol, une novolaque d'époxycrésol, un tétraglycidyléther de novolaque de glyoxalphénol, un polyépoxyde de polybutadiène, un époxyde de tris(hydroxyphényl)méthane et un aminoépoxy possédant au moins un substituant de glycidyléther, chaque résine époxy ayant un poids moléculaire compris entre 300 et 5000.

9. Fil de polyester selon la revendication 7 ou 8, où ladite résine époxy comporte de 2 à 4 groupes terminaux amino-époxy et R est une amine aromatique dans laquelle les N positions sont entièrement substituées par des groupes glycidyle.

10. Fil de polyester selon l'une des revendications 1 à 9, où le revêtement ne contient pas de durcisseur.

11. Procédé visant à modifier la surface d'un fil de polyester filé, incluant les opérations suivantes : application, sur ledit fil, d'un produit de réaction d'un composé organique halohydroxy et d'un sel d'acide faible ; étirage dudit fil ; thermofixage dudit fil ; et application, sur ledit fil thermofixé, d'un polyépoxyde possédant au moins deux groupes époxyde.

12. Procédé selon la revendication 11, incluant l'application dudit polyépoxyde à une température comprise entre 20°C et 100°C.

13. Procédé selon la revendication 11 ou 12, où ledit polyépoxyde est présent en proportion de 0,001 % à 1,0 % en poids dudit fil, et est représenté par une structure sélectionnée à partir de
(i) polyglycidyléthers, comportant trois ou davantage de groupes glycidyléther, et dérivés d'un polyol possédant de 3 à 15 atomes de carbone ou d'un polyphénol possédant de 2 à 20 unités de répétition ;
(ii) une résine de novolaque d'époxy présentant la structure 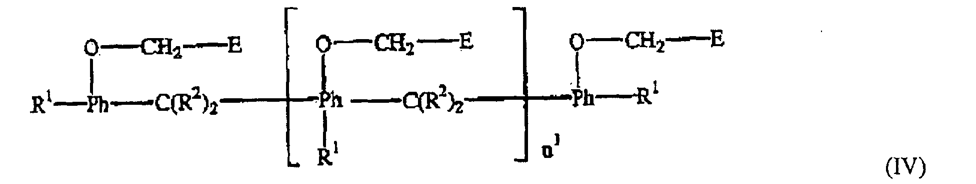 où : Ph représente un cycle de phényle ;
E représente un cycle d'époxyde : 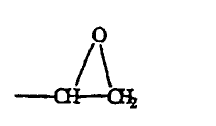
R' est un substituant sur le cycle de phényle et représente l'hydrogène, un halogène, un alkyle ou un aryle, et de préférence un alkyle en C₁ - C₄ ;
R² représente l'hydrogène, un halogène, un alkyle, un aryle ou un groupe aryle substitué par du glycidyléther ;
n¹ a une valeur non inférieure à 0, et de préférence comprise entre 0,1 et 5.
(iii) un époxyde polyfonctionnel présentant la structure 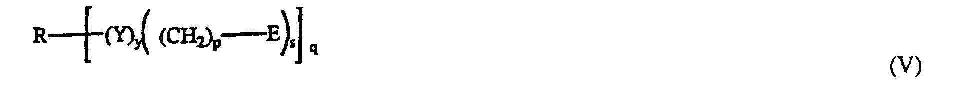 où : R est un radical aromatique, aliphatique ou aralkyle, substitué ou non substitué;
E représente un cycle d'époxyde ;
Y est un hétéroatome sélectionné parmi les éléments O, N et S ;
y représente 0 ou 1 ;
p représente un nombre entier compris entre 1 et 6 ;
q représente un nombre entier compris entre 2 et 12 ;
s représente 1 ou 2 ;
(iv) digléycidyléthers présentant la structure 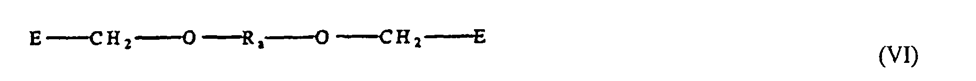 où : Rₐ représente un alkylène ou arylène ;
E représente un époxyde ;
(v) une résine à base de bisphénol-A présentant la structure 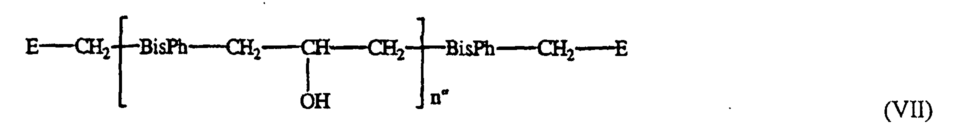
où BisPh représente : O-Ph-C(Me)₂-Ph-O ;
E représente un cycle d'époxyde ;
Me représente un groupe méthyle ;
n" a une valeur comprise entre 0,1 et environ 5.

14. Procédé selon l'une des revendications 11, 12 ou 13, dans lequel ladite application dudit polyépoxyde inclut un solvant qui est non volatil entre 38°C et 200°C.

15. Procédé selon l'une des revendications 11 à 14, dans lequel ledit polyépoxyde est soluble jusqu'à au moins 10 % en poids de la solution, dans un solvant organique liquide exempt de tout groupe OH réactif.

16. Procédé selon l'une des revendications 11 à 15, dans lequel ledit polyépoxyde inclus dans ledit revêtement est présent sous la forme d'une dispersion aqueuse de particules finement divisées de taille inférieure à 2 microns.

17. Composite comprenant un fil de polyester à l'intérieur d'un article en caoutchouc, ledit fil étant revêtu : d'une première couche faite d'un produit de réaction d'un composé organique halohydroxy et d'un sel d'acide faible ; d'une seconde couche, appliquée par-dessus ladite première couche et faite d'une résine époxy comportant au moins deux groupes époxy, ladite résine étant présente dans une proportion comprise entre 0,001 % et 0,1 % en poids dudit fil ; et d'une troisième couche, appliquée par-dessus ladite seconde couche et faite d'un bain de latex de résorcinolformaldéhyde (RFL) vulcanisé.

18. Composite selon la revendication 17, dans lequel ladite résine époxy est représentée par une structure sélectionnée à partir de
(i) polyglycidyléthers, comportant trois ou davantage de groupes glycidyléther et dérivés d'un polyol possédant de 3 à 15 atomes de carbone ou d'un polyphénol possédant de 2 à 20 unités de répétition ;
(ii) une résine de novolaque d'époxy ayant la structure 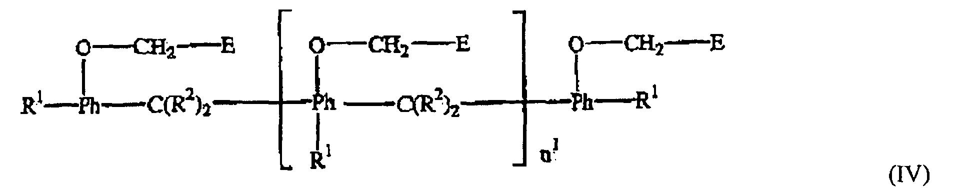 où : Ph représente un cycle de phényle ;
E représente un cycle d'époxyde 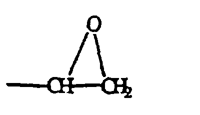
R¹ est un substituant sur le cycle de phényle et représente l'hydrogène, un halogène, un alkyle ou un aryle, et de préférence un alkyle C₁ -C₄ ;
R² présente l'hydrogène, un halogène, un alkyle, un aryle ou un groupe aryle substitué par du glycidyléther ;
n¹ a une valeur non inférieure à 0, et de préférence comprise entre 0,1 et 5 ;
(iii) un époxyde d'alkylène polyfonctionnel ayant la structure 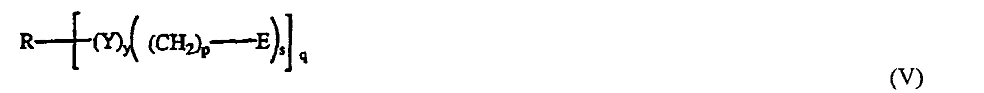 où :R est un radical aromatique, aliphatique ou aralkyle, substitué ou non substitué;
E représente un cycle d'époxyde ;
Y est un hétéroatome sélectionné parmi les éléments O, N et S ;
y représente 0 ou 1 ;
p représente un nombre entier compris entre 1 et 6 ;
q représente un nombre entier compris entre 2 et 12 ;
s représente 1 ou 2 ;
(iv) diglycidyléthers présentant la structure 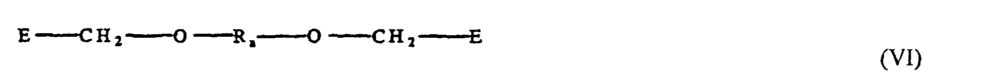 où : Rₐ représente un alkylène ou arylène ;
E représente un époxyde ;
(v) une résine à base de bisphénol-A présentant la structure 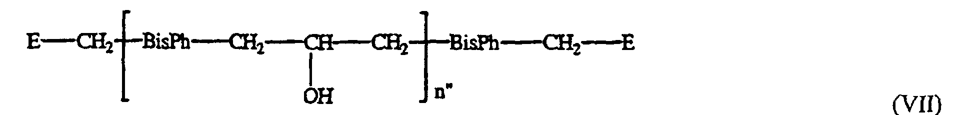
où BisPh représente : O-Ph-C(Me)₂-Ph-O ;
E représente un cycle d'époxyde ;
Me représente un groupe méthyle ;
n" a une valeur comprise entre 0,1 et environ 5.

19. Composite selon la revendication 17, dans lequel ladite résine époxy est sélectionnée à partir du groupe constitué de la structure 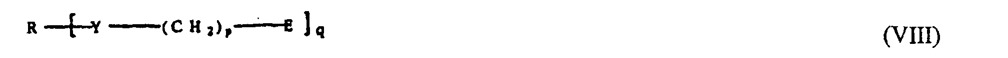 et 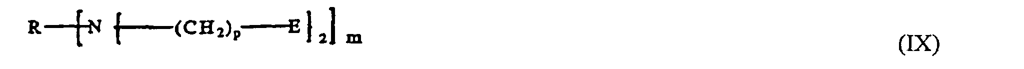 où : R est un radical aromatique, aliphatique ou aralkyle, substitué ou non substitué ;
E représente un cycle d'époxyde ;
Y est un hétéroatome sélectionné parmi les éléments O et S ;
m représente un nombre entier compris entre 1 et 4 ;
p représente un nombre entier compris entre 1 et 6 ;
q représente un nombre entier compris entre 2 et 12.

20. Composite selon la revendication 19, dans lequel ladite résine époxy est sélectionnée à partir du groupe constitué par une novolaque d'époxyphénol, une novolaque d'époxycrésol, un tétraglycidyléther de novolaque de glyoxalphénol, un polyépoxyde de polybutadiène, un époxyde de tris(hydroxyphényl)méthane et un aminoépoxy possédant au moins un substituant de glycidyléther, chaque résine époxy ayant un poids moléculaire compris entre 300 et 5000.

21. Composite selon la revendication 19 ou 20, dans lequel ladite résine époxy comporte de 2 à 4 groupes terminaux amino-époxy, et R est une amine aromatique dans laquelle les N positions sont entièrement substituées par des groupes glycidyle.

22. Complexe selon l'une des revendications 18 à 21, dans lequel ledit composé organique halohydroxy possède des fonctionnalités halogène et hydroxyle primaires, et dans lequel sa valeur d'halohydrine est inférieure ou égale à 1,7 % et sa valeur d'époxy est inférieure ou égale à 0,36 %.

23. Complexe selon l'une des revendications 18 à 22, dans lequel lesdits polyglycidyléthers de polyester sont : le polyglycidyléther de glycérol, le polyglycidyléther de sorbitol et le polyglycidyléther de polyglycérol.

24. Complexe selon l'une des revendications 17 à 23, dans lequel le revêtement ne contient pas de durcisseur.

25. Pneu comprenant un fil de polyester à l'intérieur d'un pneu en caoutchouc, ledit fil étant revêtu : d'une première couche faite d'un produit de réaction d'un composé organique halohydroxy et d'un sel d'acide faible ; d'une seconde couche, appliquée par-dessus ladite première couche et faite d'une résine époxy comportant au moins deux groupes époxy, ladite résine étant présente dans une proportion comprise entre 0,001 % et 0,1 % en poids dudit fil ; ainsi que d'une troisième couche, appliquée par-dessus ladite seconde couche et faite d'un bain de latex de résorcinolformaldéhyde (RFL) vulcanisé.
